# EUROPÄISCHE PATENTSCHRIFT

(11) **EP 4 087 817 B1**
(45) Veröffentlichungstag und Bekanntmachung des Hinweises auf die Patenterteilung: **26.11.2025**
(21) Anmeldenummer: 21700822.6
(22) Anmeldetag: 05.01.2021
(51) Int. Cl.: C01B 17/50, C01B 17/74, C01B 25/232, C01F 11/08, C01F 11/46, C04B 7/04, C04B 11/00, C04B 11/26

(54) **VERFAHREN ZUR HERSTELLUNG VON PHOSPHORSÄURE UND KLINKERPROZESS-GEEIGNETER KALZIUMSULFATQUALITÄT ZUR KOMMERZIELLEN UND INDUSTRIELLEN VERWERTUNG VON KALZIUMSULFAT**
METHOD FOR PRODUCING PHOSPHORIC ACID AND CALCIUM SULPHATE QUALITY SUITABLE FOR A CLINKER PROCESS FOR THE COMMERCIAL AND INDUSTRIAL UTILISATION OF CALCIUM SULPHATE
PROCÉDÉ DE PRODUCTION D'ACIDE PHOSPHORIQUE ET DE SULFATE DE CALCIUM DE QUALITÉ APPROPRIÉE POUR UN PROCÉDÉ DE CLINKER EN VUE D'UNE UTILISATION COMMERCIALE ET INDUSTRIELLE DE SULFATE DE CALCIUM

(30) Priorität: 08.01.2020 DE 102020100241
(43) Veröffentlichungstag der Anmeldung: 16.11.2022
(73) Patentinhaber: thyssenkrupp Industrial Solutions AG, 45143 Essen (DE); thyssenkrupp AG, 45143 Essen (DE)
(72) Erfinder: STOCKHOFF, Peter, 46286 Dorsten (DE); HELMLE, Stefan, 59071 Hamm (DE); RIVAS VILLARREAL, Deyvi Javier, 44141 Dortmund (DE); DAHEIM, Nicolai, 59269 Beckum (DE)
(74) Vertreter: thyssenkrupp Intellectual Property GmbH
(86) Internationale Anmeldenummer: PCT/EP2021/050033
(87) Internationale Veröffentlichungsnummer: WO 2021/140074

(56) Entgegenhaltungen:
- EP-A1- 0 041 761
- EP-A2- 0 044 120
- EP-B1- 0 044 120
- US-A- 2 531 977
- US-A- 4 312 842

## Beschreibung

Die Erfindung betrifft ein Verfahren zur Herstellung von Phosphorsäure und gereinigtem Kalziumsulfat, das zur Herstellung von Zementklinker und Schwefelsäure verwendet werden kann, und einer Anlage zur Durchführung des Verfahrens.

Die aus dem Phosphorsäureprozess erzielte Phosphorgipsqualität ist abhängig von Faktoren wie eingesetztes Rohphosphat und Prozessbedingungen bei dem Aufschluss des Rohphosphats mit Schwefelsäure. Abhängig vom gewählten Phosphorsäureprozess werden nach nasschemischen Verfahren bisher Ausbeuten von Phosphor aus dem Rohphosphat von maximal 98,5% erzielt (siehe z.B. Ullmann's Encyclopedia of industrial chemistry, 5. Auflage, 1991, Bd. A19, "Phosphoric Acid and Phosphate", S. 470-473).

Kalziumsulfat ist ein Abfallprodukt der Phosphorsäure produzierenden Industrie und fällt als Dihydrat und/oder Hemihydrat bei dem Aufschluss von Phosphaterzen mit Schwefelsäure an. Das bei der Herstellung von Phosphorsäure gebildete Kalziumsulfat wird auch als Phosphorgips bezeichnet.

Es existieren drei Formen des Kalziumsulfats: Dihydrat (auch bekannt als Gips), Hemihydrat (auch Bassanit) und Anhydrit.Diese können bei Phosphorsäureproduktionsverfahren anfallen und zeichnen sich mineralogisch durch unterschiedliche Mengen an Kristallwasser aus. Das Dihydrat besitzt zwei, das Hemihydrat ein halbes Kristallwasser und das Anhydrit kristallisiert ohne jegliches Kristallwasser.

Die Reaktionskinetik und die thermodynamische Stabilität der unterschiedlichen Formen des Kalziumsulfats in wässrigen Medien sind intensiv untersucht wie bspw. im Übersichtsartikel von Freyer und Voigt, Monatshefte für Chemie, 134, 693-719, 2003 nachzulesen ist. Bekannt ist dabei, dass die Dihydrat-Form bis ca. 50 °C die stabile Form ist. Darüber hinaus ist das Anhydrit die stabile Phase. Hemihydrat hingegen ist über den gesamten Temperaturbereich metastabil. Ausgehend vom Gips ist hiernach mit einer allmählichen Umwandlung zum Anhydrit in einem Temperaturbereich zwischen 42 - 60 °C (in der Literatur werden verschiedene Temperaturbereiche postuliert) für wässrige Lösungen zu rechnen. Die Löslichkeit von Anhydrit sinkt kontinuierlich bei steigenden Temperaturen. Für Gips steigt die Löslichkeit hingegen zunächst bis zu einem Plateau bei ca. 50 °C an und sinkt dann leicht bei steigender Temperatur. Dies hat zur Folge, dass sich im obig genannten Temperaturbereich die molaren Löslichkeiten der beiden Formen kreuzen und oberhalb der Temperaturen Anhydrit und unterhalb Dihydrat als schwerlösliche Salze ausfallen. Das Hemihydrat ist über den gesamten Bereich besser löslich als die beiden anderen Formen.

Hardie, The American Mineralogist, Vol. 52, 1967 konnte zeigen, dass Schwefelsäure, aufgrund der dadurch veränderten Aktivität von Wasser, einen signifikanten Einfluss auf die Kinetik der Umkristallisation des Gipses zu Anhydrit hat. Eine verminderte Aktivität des Wassers setzt dabei die Gleichgewichtstemperatur zwischen Dihydrat und Anhydrit herab und begünstigt somit die Umkristallisation zu Anhydrit bei niedrigeren Temperaturen.

Kinetische Untersuchungen zur Umkristallisation von Gips zu Anhydrit und umgekehrt basieren zumeist auf zeitabhängige Bestimmung der Mineralogie der Fällungsprodukte. Der Mechanismus der Umkristallisation ist bisher nicht eindeutig geklärt.

Bedingt durch Verunreinigungen wie Phosphor, Fluor, radioaktive Komponenten und Schwermetalle im Kalziumsulfat aus den bisherigen Verfahren zur Phosphorsäureproduktion sind die heutigen Möglichkeiten zur Verwendung des Kalziumsulfates, z.B. als Zementzusatzstoff, Düngemittel, Mörtel oder Straßenbaumaterial, eingeschränkt, so dass weltweit nur 15% der Jahresproduktion an Kalziumsulfat aus der Phosphorsäureproduktion entsprechend verwendet werden. Die restlichen 85% der Jahresproduktion an Kalziumsulfat werden entweder auf Halde gelagert oder im Meer verklappt.

Aufgrund der aktuellen Umweltsituation werden Lagerstätten zur Deponierung des Phosphorgipses oder die Verklappung von Phosphorgips im Meer entweder nur unter strengeren Auflagen oder gar nicht mehr genehmigt.

Der aufbereitete Rohphosphat kann nach den folgenden Aufbereitungsverfahren über die möglichen Phosphorsäureverfahren zur Phosphorgipsherstellung eingesetzt werden: 1. Kalzinierung, 2. Flotation, 3. Umwandlung in Mono-Kalzium-Phosphat oder Di-Kalzium-Phosphat mit Hilfe anorganischer Säuren. Die genannten Verfahren sind dem Fachmann bekannt und sind z.B. beschrieben in Physical and thermal treatment of phosphate ores - An overview; Int. J. Miner. Process. 85 (2008) 59-84; Abdel-Zaher M. Abouzeid; The Fertilizer Manual 3rd Edition; herausgegeben von UNIDO & IFDC, Ausgabe 1998; ISBN: 0792350324 9780792350323; Pyroprocessing for the minerals industry; Thyssenkrupp Polysius; Kennung: 1625/D (1.0 12.11 Stu).

Pro Tonne produzierter Phosphorsäure werden je nach Produktionsverfahren 4 bis 5 Tonnen Kalziumsulfat produziert. Auf Grund der naturgemäß unterschiedlichen Qualitäten/Zusammensetzungen der Phosphaterze und der unterschiedlichen Verfahrensparameter zur Herstellung von Phosphorsäure werden auch entsprechend unterschiedliche Qualitäten an Kalziumsulfaten produziert.

Die erhöhten Anforderungen zur Handhabung des produzierten Kalziumsulfates bzw. Phosphorgips stellen die Phosphorsäure produzierende Industrie vor komplexe Herausforderungen. Schätzungen für die Lagerung von Phosphorgips auf Lebenszeit gehen von bis zu 25 Dollar/t Gips für die produzierenden Unternehmen aus.

Als Beispiel zur möglichen kommerziellen und großtechnischen Verwendung von Kalziumsulfat/Phosphorgips wird in der Literatur vielfach die Umsetzung von Phosphorgips in Zementklinker bzw. Zement und SOz bzw. Schwefelsäure genannt. Die Umsetzung von Gips und Phosphorgips in Zement und Schwefelsäure nach dem Müller-Kühne-Prozess oder nach dem OSW-Krupp-Prozess sind seit langem bekannt, siehe z.B. die Patentschrift AT 292539 B.

DE 3222721 C2 beschreibt auf Grundlage des Müller-Kühne-Prozesses ein verbessertes Verfahren durch eine vorgeschaltete Teilentwässerung des Gipses durch Zentrifugieren mit nachgeschalteter zweistufiger Trocknung, wobei das aus der ersten Trocknungsstufe austretende SO₂-haltige Abgas direkt in den Gaswäscher der Schwefelsäureanlage eingeleitet wird. Das beschriebene Verfahren nimmt keinen Bezug auf Qualität des Phosphorgips hinsichtlich bestimmter Komponenten und auch keinen Bezug auf die Qualität des SO₂-Abgases für die angedeutete, nachgeschaltete Schwefelsäureanlage.

Ähnlich dem erfindungsgemäßen Verfahren sind in der Patentliteratur vergleichbare Verfahren nach einem Anhydrit-Prozess (Hammaren US 2531977 und Weterings EP 0044120) bekannt.

In der Patentschrift US 2531977 wird ein Verfahren beschrieben, bei dem zunächst ein phosphorhaltiges Kalziumsalz zu Kalziumsulfat und in einem zweiten Schritt das Kalziumsulfat zu Anhydrit umgewandelt wird. Dieser zweite Umwandlungsschritt bedarf nach besagtem Patent Reaktionszeiten von mindestens 2 Stunden. Es wird beschrieben, dass daraus eine Erhöhung der Phosphorausbeute und gleichzeitig eine Reinigung des Anhydrits erfolgt. In der Patentschrift wird aber weder eine konkrete Angabe zu der Ausbeutenerhöhung noch der Reinigungseffizienz des Verfahrens gemacht. Nachteilig, wie im Patent EP 004120 ausgeführt, ist die Tatsache, dass nach dem genannten Verfahren lediglich ungefähr die Hälfte des Kalziumsulfats in Anhydrit umgewandelt werden kann, da nach dem besagten Verfahren sonst der Wasserhaushalt der Phosphorsäureanlage signifikant negativ beeinflusst wird.

EP 004120 beschreibt ein verbessertes Verfahren zu US 2531977. Um den Wasserhaushalt der Phosphorsäureanlage nicht zu stören, wird in diesem Verfahren die nach dem ersten Schritt erhaltene Dihydrat-Phosphorsäure-Suspension aufwändig über mehrere Hydrozyklone in eine Fein- und Grobfraktion getrennt, über einen Eindicker flüssige Bestandteile herausgeholt, um eine Störung der Wasserbilanz möglichst zu vermeiden, und letztlich über eine weitere Filtrationseinheit getrennt, bevor das Dihydrat dem Rekristallisationsschritt zum Anhydrit zugeführt wird. Das Verfahren hat einige offensichtliche Nachteile, die da wären, dass (i) diverse weitere Prozessschritte, wie Hydrozyklone, Eindicker und eine zusätzliche Filtrationseinheit benötigt werden, (ii) 5 - 15 % des Dihydrats verworfen werden müssen, (iii) der Verschaltungs- und Bedienungsaufwand der Anlage deutlich erhöht ist, wobei eine Integration in bestehende Anlagen deutlich erschwert ist und (iv) deutliche höhere Investitions- und Betriebskosten nach beschriebenen Verfahren entstehen würden.

Kandil et al., Journal of Radiation Research and Applied Sciences; 10; 2017, beschreiben ein Verfahren zur Herstellung von Ammoniumsulfat aus Phosphorgips, in dem in einem ersten Schritt Schwefelsäure zur Auslaugung von P₂O₅, F, Lanthaniden und weiteren Bestandteilen eingesetzt wird. Das beschriebene Verfahren steht in keinem Zusammenhang mit der Umwandlung von Phosphorgips in Zementklinker und Schwefelsäure.

EP 0041761 A1 betrifft im Zusammenhang mit der Umwandlung von Phosphorgips in Zementklinker und SO₂-Gas ausschließlich die Umkristallisation von Kalziumsulfat-dihydrat nach Kalziumsulfat-anhydrit. Es können P₂O₅-Gehalte von unter 0,01 Gewichts-% und Fluor-Gehalte von unter 0,05 Gewichts-% im Kalziumsulfat-anhydrit erzielt werden. Aus dem so gewonnenen Anhydrit können bei hohen Temperaturen Kalziumkomponenten und Schwefeldioxid gewonnen werden. Die Möglichkeit zur Rückführung von verbrauchter Schwefelsäure in den Phosphorsäureprozess wird erwähnt, jedoch werden Einflussfaktoren wie Korngröße des Gipses sowie Feststoff zu Flüssigkeit-Verhältnis (S/L), die direkten Einfluss auf die Wasserbilanz im Phosphorsäurekomplex haben, nicht berücksichtigt.

CA 886485 A betrifft ein Verfahren zur Behandlung von Dihydrat-Gips aus der Phosphorsäureproduktion zur Reduzierung des P₂O₅ Gehalts durch Umkristallisierung des Dihydrat-Gips in Hemihydrat-Gips oder Anhydrit-Gips in Säure bei 50 bis 150°C und Konzentrationen der Säure 0,5 bis 60 Gewichtsprozent. Der Verweilzeitraum beträgt 0,5 bis 2 Stunden. Der erhaltene Gips kann als Zuschlagstoff in der Zementindustrie eingesetzt werden.

CN 101486536 A betrifft ein Verfahren zur Behandlung von Phosphorgips mittels Schwefelsäure. Primäres Ziel ist die Reduzierung von Phosphor aus dem Gips. Nach der Behandlung mit Schwefelsäure wird der Gips noch mit Kalziumprodukten neutralisiert. Der so behandelte Gips soll als Rohmaterial für Zement oder als Additiv genutzt werden können.

In CN 105859167 A wird ein Verfahren zur Herstellung von weißem Kalziumsulfat-Anhydrit beschrieben. Die Behandlung von gesiebtem Phosphorgips als Ausgangsmaterial erfolgt mittels Schwefelsäure und einem Extraktionsmittel insbesondere zur Reduzierung des Phosphorgehalts.

GB 1007898 betrifft ein Verfahren zur Herstellung von Phosphorsäure auf Basis des HDH (Hemihydrat-Dihydrat)-Prozesses. Dieses wird durch Einstellung von Prozessparametern erreicht, die spezifisch für die jeweilige Hydratation sind.

GB 1128104 betrifft ein Verfahren zur Herstellung von konzentrierter Phosphorsäure, bei dem der Gips in Form von Anhydrit mit reduziertem Gehalt an P₂O₅ und Fluor anfällt.

Singh and Garg; Production of Beneficiated Phosphogypsum for Cement Manufacture; Journal of Scientific & Industrial Research; 61; 2002, berichten über die Aufreinigung von Phosphorgips in Bezug auf die Phosphor- und Fluoridverunreinigungen, wobei das Verfahren ein Waschen des Phosphorgips mit einer Nasssiebung der Suspension auf Partikelgrößen über 300 pm kombiniert. Nachteile dieses Verfahrens sind, dass eine P- bzw. F-Abreicherung nur bis zu einem gewissen Grad möglich ist, eine erfolgreiche Aufreinigung maßgeblich von der Natur des Gipses und der damit verbundenen Partikelgrößenverteilung abhängt und ein größerer Anteil des Phosphorgips als Abfallstoff anfällt.

Aliedeh; Factorial Design Study of P2O5 Reduction for Jordanian Phosphogypsum using Sulfuric and Nitric Acids Solutions; Journal of Chemical Technology and Metallurgy, 53, 2018, wählt als Ansatz eine nasschemische Auslaugung des Gipses mittels Salpetersäure bzw. Schwefelsäure, wobei insbesondere der P-Gehalt reduziert werden soll. Die Konzentrationen der beiden eingesetzten Säuren betrug 0,5 bis 1,5 Gew.-% für H₂SO₄ bzw. 1 bis 5 Gew.-% für HNO₃. Nach den Ergebnissen zeigt sich ein drastischer Einfluss auf das Auslaugungsverhalten durch die Anzahl der Waschvorgänge und ein geringerer Einfluss durch Konzentration und S/L-Verhältnis. Aus den vorgestellten Auslaugungsergebnissen wird ersichtlich, dass enorme Mengen an Waschlösung benötigt werden.

Aus der US 4 312 842 A ist ein Verfahren zur Herstellung von Phosphorsäure mit Rückgewinnung der Nebenprodukte bekannt.

Die Verfahren nach dem Stand der Technik liefern Ausbeuten von Phosphor aus dem Rohphosphat, die verbesserungswürdig sind. Auch bei der Aufreinigung des erhaltenen Kalziumsulfats besteht Verbesserungsbedarf.

Unter der Auslaugungseffizienz wird der prozentuale Anteil einer betrachteten Substanz verstanden, welche von einer Ausgangsphase (z.B. Feststoff) in eine andere Phase (z.B. Flüssigkeit) - bezogen auf die gesamte Menge der betrachteten Substanz in der Ausgangsphase - überführt (oder auch extrahiert) wird.

Generell werden in der Literatur lediglich die jeweiligen Einzelprozesse wie Aufbereitung des Phosphorgipses, thermische Zersetzung des Phosphorgipses in Zementklinker und Schwefeldioxid beschrieben. Nur vereinzelt werden mögliche Zusammenhänge mit vor- und/oder nachgeschalteten Prozessen erwähnt.

Voraussetzung für den Einsatz von Kalziumsulfat/Phosphorgips als Basismaterial für die Klinkerherstellung ist die Einhaltung der Grenzwerte bzw. Richtwerte für bestimmte Komponenten im Phosphorgips, die sich nachteilig auf die aus dem Klinker hergestellte Zementqualität auswirken. Dazu gehören u.a. Phosphor, Fluorid und gegebenenfalls radioaktive Bestandteile.

Die Aufgabe der vorliegenden Erfindung besteht darin, ein Verfahren zur Herstellung von Phosphorsäure und gereinigtem Kalziumsulfat in der Art bereitzustellen, dass eine möglichst maximale P₂O₅-Ausbeute resultiert und dass das gereinigte Kalziumsulfat (Phosphorgips) zur Herstellung von Wertprodukten, im industriellen Maßstab verwendet werden kann, um die umweltbedingten und wirtschaftlichen Anforderungen zu erfüllen. Eine weitere Aufgabe bestand darin, die Auslaugungungseffizienz und Filtrierbarkeit für Phosphorgips bzw. Kalziumsulfat zu verbessern bzw. zu optimieren.

Diese Aufgabe wird erfindungsgemäß durch ein Verfahren gemäß Patentanspruch 1 gelöst. Insbesondere wird die Aufgabe gelöst durch ein Verfahren zur Herstellung von Phosphorsäure und gereinigtem Kalziumsulfat durch Umsetzung von Rohphosphat mit Schwefelsäure, wobei das Verfahren folgende Schritte umfasst:
a) das Rohphosphat wird in einem ersten Schritt mit konzentrierter Schwefelsäure aufgeschlossen und zu Kalziumsulfat in Form von Dihydrat, Hemihydrat oder einer Kombination aus Hemihydrat und Dihydrat und Phosphorsäure umgewandelt,
b) das Kalziumsulfat wird als Feststoff von der flüssigen Phase der erhaltenen Suspension abgetrennt,
c) das von der Phosphorsäure abgetrennte Kalziumsulfat aus Schritt b) und/oder Kalziumsulfat/Phosphorgips von der Halde wird mit einer Säure behandelt, um eine Suspension mit gereinigtem Kalziumsulfat und P₂O₅-haltiger Säure-Lösung zu erhalten,
d) das gereinigte Kalziumsulfat nach Schritt c) wird als Feststoff von der flüssigen Phase der erhaltenen Suspension abgetrennt,
e) e1) die P₂O₅-haltige erhaltene flüssige Phase aus Schritt d) wird als Einsatzstoff in Schritt a), insbesondere als Teilmenge der erforderlichen Schwefelsäure zum Aufschluss des Rohphosphats verwendet und/oder e2) die P₂O₅-haltige erhaltene flüssige Phase aus Schritt d) wird als Einsatzstoff zur Behandlung von Phosphorgips von der Halde gemäß Schritt c) verwendet, um eine Suspension von gereinigtem Kalziumsulfat und/oder P₂O₅-haltiger Säure-Lösung zu erhalten.

Die Aufgabe wird erfindungsgemäß auch in einem weiteren Sinne durch ein Verfahren gemäß Patentanspruch 2 gelöst. Insbesondere betrifft dies ein Verfahren zur Herstellung von Schwefelsäure und Zementklinker, wobei das Verfahren folgende Schritte umfasst:
a) Rohphosphat wird in einem ersten Schritt mit konzentrierter Schwefelsäure aufgeschlossen und zu Kalziumsulfat in Form von Dihydrat, Hemihydrat oder einer Kombination aus Hemihydrat und Dihydrat und Phosphorsäure umgewandelt,
b) das Kalziumsulfat wird als Feststoff von der flüssigen Phase der erhaltenen Suspension abgetrennt,
c) das von der Phosphorsäure abgetrennte Kalziumsulfat aus Schritt b) und/oder Kalziumsulfat/Phosphorgips von der Halde wird mit einer Säure behandelt, um eine Suspension mit gereinigtem Kalziumsulfat und P₂O₅-haltige Säure-Lösung zu erhalten,
d) das gereinigte Kalziumsulfat nach Schritt c) wird als Feststoff von der flüssigen Phase der erhaltenen Suspension abgetrennt,
e) das in Schritt d) erhaltene abgetrennte gereinigte Kalziumsulfat wird mit Zusatzstoffen und Reduktionsmittel vermischt, um eine Rohmehlmischung für die Zementklinkerproduktion zu erhalten,
f) die Rohmehlmischung wird gebrannt, um den Zementklinker zu erhalten, wobei Schwefeldioxid als Abgas gebildet wird, und
g) das gebildete Schwefeldioxid wird als Rohstoff einer Schwefelsäureproduktion zugeführt, um die Schwefelsäure herzustellen, wobei die hergestellte Schwefelsäure als Einsatzmaterial in der Phosphorsäureproduktion verwendet und/oder einer anderen Nutzung zugeführt werden kann.

In einer bevorzugten Ausführungsform des vorstehenden Verfahrens wird e1) die P₂O₅-haltige erhaltene flüssige Phase aus Schritt d) als Einsatzstoff in Schritt a), insbesondere als Teilmenge der erforderlichen Schwefelsäure zum Aufschluss des Rohphosphats verwendet wird und/oder wird e2) die P₂O₅-haltige erhaltene flüssige Phase aus Schritt d) als Einsatzstoff zur Behandlung von Phosphorgips von der Halde gemäß Schritt c) verwendet wird, um eine Suspension von gereinigtem Kalziumsulfat und P₂O₅-haltiger Säure-Lösung zu erhalten.

Die folgenden Ausführungen zu den Verfahren gelten für beide vorstehend genannten erfindungsgemäßen Verfahren, soweit anwendbar und nicht anders angegeben. Sie gelten auch für die nachstehend angeführten erfindungsgemäßen Anlagen und den darin verwendeten Einrichtungen, soweit anwendbar und nicht anders angegeben. Angaben zu Verfahrensschritten bzw. Einrichtungen, die lediglich das umfassendere Verfahren bzw. die umfassendere Anlage betreffen, beziehen sich naturgemäß darauf.

Die erfindungsgemäßen Verfahren sind insbesondere integrierte Verfahren. Der integrative Ansatz als Gesamtkonzept vom Phosphorgips zum Kalziumsulfat bzw. zum Zementklinker und Schwefeldioxid bei dem integrierten Verfahren ermöglicht die Abstimmung der Abhängigkeiten/Einflussfaktoren zur optimierten Verfahrenswahl und damit verbunden die einhergehende Flexibilität der Prozessführung mit der Möglichkeit, in bestehende Phosphorsäure- und Schwefelsäureanlagenkomplexe eingebunden zu werden. So können alle Prozessparameter und Verfahrensstufen des Gesamtkomplexes zur Erzielung spezifischer Produktqualitäten ausgehend von einer variablen Eduktbeschaffenheit, wie z.B. der Eduktbeschaffenheit von dem in der Phosphorsäureproduktion eingesetzten Apatit oder dem Phosphorgips der aktuellen Produktion bzw. der Halde aufeinander abgestimmt werden. Dies wurde bis heute nicht betrachtet. Die Merkmalskombinationen des erfindungsgemäßen integrativen Verfahrens lassen sich aus dem Stand der Technik nicht herleiten.

Im Folgenden werden in diesem Zusammenhang die Ausdrücke Komplex und Anlage austauschbar verwendet. Die in Schritt d) erhaltene abgetrennte flüssige Phase kann in die Reaktionseinheit der Phosphorsäureproduktion als Einsatzstoff eingebracht werden.

Durch das erfindungsgemäße Verfahren können Verunreinigungen wie Phosphor, Fluorid und gegebenenfalls radioaktive Bestandteile, die sich nachteilig auf die aus dem Klinker hergestellte Zementqualität auswirken, aus dem Kalziumsulfat/Phosphorgips entfernt werden, so dass bestehende Grenzwerte oder Richtwerte für solche Verunreinigungen im Klinker eingehalten werden können. Ein Vorteil des Verfahrens ist die Flexibilität, da der erforderliche Grad der Optimierung der P₂O₅-Ausbeute für den Phosphorsäureprozess und damit auch der Reinigung des Phosphorgipses durch Anpassen der Parameter eingestellt und kontrolliert werden kann. Das durch das erfindungsgemäße Verfahren aufbereitete Kalziumsulfat kann daher als Basismaterial für die Klinkerherstellung unter Einhaltung der Grenzwerte und/oder Richtwerte eingesetzt werden.

Durch das erfindungsgemäße Verfahren, bei dem das bei der Phosphorsäureproduktion aus Schritt b) anfallende Kalziumsulfat mit einer Säure versetzt und behandelt wird, können in Abhängigkeit von Konzentration der Säure, der Verweilzeit, dem Feststoff/Flüssigkeits-Verhältnis und der Temperatur die P₂O₅-Ausbeute im Phosphorsäureprozess erhöht werden und zugleich die Konzentrationen der Verunreinigungen, die den Klinkerprozess und die Zementqualität beeinträchtigen, auf das erforderliche Maß reduziert werden. Die Vorgabe der Konzentration der Verunreinigungen im behandelten Kalziumsulfat kann in Abhängigkeit der gewünschten Rohmehlzusammensetzung für den Klinkerprozess erfolgen. Die Konzentration der Verunreinigungen kann durch ein Analysenverfahren überwacht und kontrolliert werden. Das Analyseverfahren kann ein direktes oder indirektes Analyseverfahren sein.

Als Vorteile der erfindungsgemäßen Verfahren, insbesondere des integrierten Verfahrens, können insbesondere folgende Punkte genannt werden:
1. Erhöhung der Ausbeute an Phosphor aus dem Rohphosphat, damit bessere Verwertung des eingesetzten Rohphosphats zum Zweck der Phosphorsäureproduktion
2. Einsatz des produzierten Kalziumsulfates/Phosphorgips als Rohstoff zur Herstellung von Wertprodukten
3. Umwandlung des Kalziumsulfates/Phosphorgips in Zementklinker als Rohstoff für die Zementproduktion und Schwefeldioxid als Rohmaterial für die Schwefelsäureproduktion
4. Der Prozess zur Herstellung von Zementklinker bzw. Zement kann hinsichtlich der Ausgangsqualität des Phosphorgipses flexibel und in Kombination mit einem Phosphorsäureprozess geführt werden,
5. Die Reinigungseffizienz und Filtrierbarkeit des Phosphorgipses zur Herstellung von Zementklinker kann mittels eines einfachen Analyseverfahrens (off-line und/oder on-line) gezielt eingestellt, optimiert und kontrolliert werden.
6. Die aus dem SO₂-Abgas hergestellte Schwefelsäure kann in den Gesamtkomplex eingebracht und verbraucht sowie erzeugt und beispielsweise im Kreis geführt werden
7. Reduzierung der Auswirkungen durch Kalziumsulfat-/Phosphorgips-Deponierung und/oder Verklappung auf die Umwelt
8. Rückgewinnung und Zirkulation des eingesetzten Schwefels im Phosphorsäureprozess und/oder einer weiteren Nutzung, damit lediglich Einsatz von neuem Schwefel als Ausgleich von Verlusten. Allgemeine Ausführungsbeispiele sind eine Kreislaufführung der Schwefelsäure oder die Nutzung von Phosphorgips aus Halden. In letzteren Fall muss Schwefelsäure exportiert werden, der Ausgleich des Schwefels ist nur im Rahmen der Kreislaufführung von Schwefelsäure nötig
9. Reduzierung des CO2-Footprints durch den Einsatz von Kalziumsulfat/Phosphorgips als Rohmaterial für die Zementklinkerherstellung
10. Integrativer Einsatz bestehender Anlagenkomponenten des Phosphor- und Schwefelsäurekomplexes, damit reduzierter zusätzlicher Investitionsaufwand

Der hier beschriebene Ansatz des integrierten Verfahrens kann in 6 Kategorien von Herstellprozessen zusammengefasst werden:
- Herstellung von Phosphorsäure und gereinigtem Kalziumsulfat mit optimierter Phosphorausbeute aus Phosphorgips gemäß den Schritten a) bis d) des erfindungsgemäßen Verfahrens,
- Herstellung von Phosphorgips mit geeigneter Qualität für den Zementklinkerprozess gemäß den Schritten c) und d) des erfindungsgemäßen Verfahrens,
- Herstellung der Rohmehlmischung, die für den Zementklinkerprozess spezifisch ist, gemäß Schritt e) des erfindungsgemäßen Verfahrens,
- Herstellung des Zementklinkers gemäß Schritt f) des erfindungsgemäßen Verfahrens und gegebenenfalls Weiterverarbeitung des Zementklinkers zu Zement,
- Herstellung von Schwefeldioxidgas mit einer Qualität, die für den Schwefelsäureprozess geeignet ist, gemäß Schritt f) des erfindungsgemäßen Verfahrens, wobei das Schwefeldioxidgas gegebenenfalls noch einer Abgasreinigung zu unterwerfen ist, bevor es Schritt g) zugeführt wird,
- Herstellung der Schwefelsäure gemäß Schritt g) des erfindungsgemäßen Verfahrens.

Das erfindungsgemäße Verfahren zur Herstellung von Phosphorsäure und gereinigtem Kalziumsulfat kann auch zur Optimierung von bestehenden Phosphorsäureanlagen eingesetzt werden. Bei der Phosphorsäureproduktion kann es sich nach erfindungsgemäßen Verfahren in Schritt a) um das übliche Nassverfahren handeln, bei dem Rohphosphat mit Schwefelsäure umgesetzt bzw. aufgeschlossen wird, um Phosphorsäure (Aufschlussphosphorsäure) zu bilden.

Als Rohphosphat werden sedimentäre und magmatische Phosphatgesteine verwendet, die in der Regel vor dem Einsatz aufbereitet werden. Die Aufbereitung schließt üblicherweise ein Zerkleinern und Aufkonzentrieren hinsichtlich des Phosphorgehalts ein. Zur Aufbereitung kann Phosphaterz oder Phosphatgestein, insbesondere Apatit-haltiges Erz, z.B. einer Kalzinierung, Flotation und/oder Umwandlung in Mono-Kalzium-Phosphat oder Di-Kalzium-Phosphat mit Hilfe anorganischer Säuren, unterworfen werden.

Die Herstellung von Phosphorsäure nach den üblichen Nassverfahren gemäß Schritt a) ist dem Fachmann allgemein bekannt. Allgemeine Beschreibungen des Verfahrens finden sich z.B. in Ullmann's Encyclopedia of industrial chemistry, 5. Auflage, 1991, Bd. A19, "Phosphoric Acid and Phosphate", S. 465-505.

Dem Fachmann sind nachfolgende Prozesse zur Herstellung von Phosphorsäure bekannt: 1. Dihydrat (DH)-Prozess, 2. Hemihydrat (HH)-Prozess, 3. Dihydrat-Hemihydrat (DHH)-Prozess, 4. Hemihydrat-Dihydrat (HDH)-Prozess und 5. Dihydrat-Attack-Hemihydrat-Filtration (DA-HF)-Prozess.

Für die vorliegende Erfindung ist im Allgemeinen einer der obigen fünf Prozesse einzusetzen, wobei bei den Prozessen 3. bis 5. (DHH/HDH/DA-HF) eine Rekristallisation des Kalziumsulfats erfolgt, was für das erfindungsgemäße Verfahren nicht erforderlich ist.

Nach dem erfindungsgemäßen Verfahren wird in Schritt a) das Kalziumsulfat, welches beispielsweise nach einem der obig genannten fünf Verfahren erhalten wurde, nach Abtrennung aus der Phosphorsäureproduktion mit einer Säure behandelt, wodurch die P₂O₅-Ausbeute erhöht wird.

Das in Schritt a) gebildete Kalziumsulfat ist Kalziumsulfat in Form von Dihydrat, Hemihydrat oder einer Kombination davon.

Die dem Fachmann bekannte Phosphorsäureproduktionsanlage umfasst bevorzugt eine Aufbereitungseinheit für Phosphatgestein, eine Reaktionseinheit für die Umsetzung von Rohphosphat mit Schwefelsäure sowie eine Trenneinheit, bevorzugt eine Filtrationseinheit, zur Abtrennung von Kalziumsulfat. In der Regel umfasst die Phosphorsäureproduktionsanlage zusätzlich eine Schwefelsäureproduktionsanlage, so dass sich ein Phosphorsäure-Schwefelsäure-Komplex ergibt.

Die Phosphorsäureproduktionsanlage nach dem erfindungsgemäßen Verfahren umfasst bevorzugt eine Aufbereitungseinheit für Phosphatgestein, eine Reaktionseinheit für die Umsetzung von Rohphosphat mit Schwefelsäure sowie eine erste Trenneinheit, bevorzugt eine Filtrationseinheit, zur Abtrennung von Kalziumsulfat. Des Weiteren umfasst die Phosphorsäureproduktionsanlage nach dem erfindungsgemäßen Verfahren bzw. der erfindungsgemäßen Anlage eine Behandlungseinheit zur Optimierung der Phosphorausbeute einhergehend mit der Reinigung des Kalziumsulfats aus der Phosphorsäureanlage und/oder von der Halde, bestehend aus einer Aufreinigungseinheit bzw. Reaktionseinheit für Kalziumsulfat und einer zweiten Trenneinheit, insbesondere einer Filtrationseinheit, zur Abtrennung des gereinigten Kalziumsulfats. Die Phosphorsäureproduktionsanlage nach dem erfindungsgemäßen Verfahren umfasst im allgemeinen zusätzlich eine Schwefelsäureproduktionsanlage, so dass sich ein Phosphorsäure-Schwefelsäure-Komplex ergibt.

In einer Ausführungsform des erfindungsgemäßen Verfahrens kann die Schwefelsäureproduktionsanlage optional in einem Verbund mit der Phosphorsäureproduktionsanlage in einem Phosphorsäure-Schwefelsäure-Komplex integriert sein.

Beim Phosphorsäure-Produktionsverfahren wird gemäß Schritt a) bei der Umsetzung von Rohphosphat mit Schwefelsäure zur Bildung von Phosphorsäure Kalziumsulfat als festes Nebenprodukt gebildet, das von der Phosphorsäure gemäß Schritt b) abgetrennt wird. Die Abtrennung kann z.B. durch Zentrifugieren, Filtrieren, Absetzen oder Eindampfen erfolgen, wobei eine mechanische Abtrennung bevorzugt ist. Das feste Kalziumsulfat wird bevorzugt durch Filtration von Phosphorsäure abgetrennt. Die Abtrennung umfasst oder besteht aus der Abtrennung von dem gebildeten Kalziumsulfat von der Phosphorsäure (Produktsäure) (erste Trennung), bevorzugt durch Filtration. Je nach Prozess kann der durch die erste Trennung abgetrennte Kalziumsulfat-Feststoff (bevorzugt Filterkuchen) gegebenenfalls noch einer oder mehreren Waschungen mit Flüssigkeit, insbesondere Wasser, mit anschließender Abtrennung, bevorzugt Filtration, der Flüssigkeit unterworfen werden.

Für das von der Phosphorsäure abgetrennte Kalziumsulfat, das in Schritt c) eingesetzt wird, kann das direkt nach der ersten Trennung von der Phosphorsäure erhaltene Kalziumsulfat nach Schritt b) verwendet werden, da eine weitere Waschung nicht zwingend erforderlich ist. Dadurch wird eine Reduktion der Filterfläche im Phosphorsäure-Prozess ermöglicht. Es ist aber auch möglich, für das von der Phosphorsäure abgetrennte Kalziumsulfat, das in Schritt c) eingesetzt wird, Kalziumsulfat zu verwenden, das nach der ersten Trennung von der Phosphorsäure nach Schritt b) einer oder mehreren Wäschen mit einer Flüssigkeit, vorzugsweise Wasser, unterworfen wurde, bevor es Schritt c) zugeführt wird.

In einer bevorzugten Ausführungsform des erfindungsgemäßen Verfahrens wird die nach Schritt a) erhaltene Suspension ohne weitere Waschung lediglich in eine Phosphorsäure enthaltene flüssige Phase und eine Kalziumsulfat enthaltende, Restfeuchte aufweisende feste Phase getrennt, wobei die Kalziumsulfat enthaltende, Restfeuchte aufweisende feste Phase direkt dem Schritt c) zugeführt werden kann.

Der Vorteil dieser Ausführungsform ist, dass nach Schritt e1) und/oder Schritt e2) des erfindungsgemäßen Verfahrens der Wasserhaushalt der Phosphorsäureanlage lediglich marginal beeinflusst wird.

Alternativ zu den Schritten a) und b) oder zusätzlich kann bereits auf Halden gelagertes Kalziumsulfat aus der Phosphorsäureproduktion als das Kalziumsulfat verwendet werden, das in Schritt c) eingesetzt wird. In einer Ausführungsform wird aus den Schritten a) und b) erhaltenes Kalziumsulfat und gegebenenfalls das auf Halden gelagerte Kalziumsulfat, bevorzugt Kalziumsulfat von Halden aus der Phosphorsäureproduktion in Schritt c) eingesetzt.

Die Umsetzung von Rohphosphat mit Schwefelsäure findet in dem Phosphorsäureproduktionskomplex in der Reaktionseinheit der Phosphorsäureanlage statt. Das erhaltene Reaktionsgemisch wir dann zur der Trenneinheit, bevorzugt Filtrationseinheit, der Phosphorsäureanlage gefördert, wo die Phosphorsäure von dem gebildeten Kalziumsulfat in einer oder mehreren Trennstufen abgetrennt bzw. abfiltriert wird. Das Kalziumsulfat für den Einsatz in der Stufe c) wird der Trenneinheit bzw. Filtrationseinheit aus Schritt b) entnommen, bevorzugt aus der ersten Trennstufe, und/oder als Kalziumsulfat für den Einsatz in der Stufe c) wird auf Halden gelagertes Kalziumsulfat aus der Phosphorsäureproduktion verwendet.

Das abgetrennte Kalziumsulfat, das in Schritt c) eingesetzt wird, ist bevorzugt Kalziumsulfat in Form von Dihydrat, Hemihydrat oder einer Kombination davon.

Nach der Abtrennung von der Phosphorsäure kann das Kalziumsulfat direkt Schritt c) zugegeben werden oder vor der Zuführung zu Schritt c) gegebenenfalls ein-, zwei- oder mehrmals mit Wasser gewaschen werden. Bevorzugt liegt der Gehalt an freiem Wasser in dem abgetrennten Kalziumsulfat, das in Schritt c) eingesetzt wird, in einer Größenordnung vor, so dass sich in Schritt c) mit Zugabe der entsprechenden Säure eine Säurekonzentration im Bereich von 1 bis 12 molar, bevorzugt im Bereich von 3 bis 10 molar, bevorzugter im Bereich von 5 bis 8 molar einstellen lässt.

In Schritt c) des erfindungsgemäßen Verfahrens wird das abgetrennte Kalziumsulfat aus der Phosphorsäureproduktion mit einer Säure behandelt. Die Säure wird dem Kalziumsulfat zugegeben, um die Behandlung durchzuführen. Auf diese Weise wird nach der Behandlung eine Suspension mit gereinigtem Kalziumsulfat erhalten. Bei der erhaltenen Suspension kann es sich z.B. um einen Schlamm bzw. eine Aufschlämmung handeln. Durch die Behandlung können die Verunreinigungen im Kalziumsulfat, die den nachgeschalteten Zementklinkerprozess und die Zementqualität negativ beeinflussen, auf den vom nachgelagerten Zementklinkerprozess geforderten Gehalt reduziert werden.

Zur Behandlung des Kalziumsulfats in Schritt c) wird eine Säure zugegeben. Die Säure ist bevorzugt eine verdünnte Säure. Verdünnte Säuren sind Säuren, die mit Wasser verdünnt sind (wässrige Säuren). Die Säure, bevorzugt die verdünnte Säure, ist vorzugsweise eine anorganische Säure, z.B. Salzsäure, Salpetersäure, schweflige Säure und/oder Schwefelsäure, wobei schweflige Säure und/oder Schwefelsäure besonders bevorzugt sind.

In Schritt c) wird die Säure in einer solchen Menge zugegeben, dass das Verhältnis von Feststoff zu Flüssigkeit (S/L-Verhältnis) in der Suspension im Bereich von 1/10 bis 1/1, bevorzugt 1/5 bis 1/1, bevorzugter 1/5 bis 1/1,3, noch bevorzugter 1/4 bis 1/2 liegt. Das Verhältnis von Feststoff zu Flüssigkeit (S/L-Verhältnis) bezieht sich auf die Masse des Feststoffs in Kilogramm und das Volumen der Flüssigkeit in Liter bei einer Bezugstemperatur von 20°C.

Die Konzentration der eingesetzten Säure wird dabei so gewählt, dass die aus der Behandlung nach Schritt c) resultierende Säure z.B. im Bereich von 1 bis 12 molar, vorzugsweise im Bereich von 3 bis 10 molar, bevorzugter im Bereich von 5 bis 8 molar, liegt, wobei es sich um eine wässrige Säure handelt. Unter 1 molar wird dabei 1 mol Säure pro 1 Liter Lösung bei 20 °C verstanden. Da das zu behandelnde Kalziumsulfat Wasser enthält und während des Reaktionsverlaufs Kristallwasser frei werden kann, kann die Konzentration der zugesetzten Säure höher sein als die Konzentration der nach der Zugabe resultierenden Säure. Bei hohen Restsäure-Gehalten im eingesetzten Phosphorgips, wie bspw. freier Phosphorsäure, kann die Konzentration der zugesetzten Säure aber auch niedriger sein als die Konzentration der nach der Zugabe resultierenden Säure. Die Konzentration der resultierenden Säure kann über den gesamten Reaktionsverlauf schwanken. Im Allgemeinen liegt die Molarität der zugesetzten Säure bevorzugt in den Bereichen, die vorstehend und nachstehend für die resultierende Säure genannt wird.

Zu Beginn der Auslaugung in Schritt c) des erfindungsgemäßen Verfahrens kann die Säurekonzentration ansteigen. Dies ist mit der Freisetzung von im verunreinigten Phosphorgips enthaltenen freien Säuren (Brønsted Säuren wie Phosphorsäure und/oder Lewis-Säuren wie bspw. dreiwertiges Eisen) zu erklären. Je nach Reaktionsbedingung kann die Bestimmung der Säurekonzentration eine indirekte Abschätzung der enthaltenen freien Säuren ermöglichen. Aufgrund des freiwerdenden Kristallwassers des Gipses und/oder Hemihydrates während der Umkristallisation in Schritt c) fällt die Säurekonzentration der zugegebenen Säure jedoch zwangsläufig (wieder) ab. Die Freisetzung des Kristallwassers kann im Umkehrschluss als Indikation des Reaktionsfortschrittes dienen. Gefunden wurde nun, dass die Säurekonzentration jedoch nicht konstant fällt, sondern nach Durchlaufen eines Minimums erneut ansteigt. Das Durchschreiten dieses Minimums steht zeitgleich für eine maximale Umwandlung des Dihydrates und/oder Hemihydrates zum Anhydrit. Zugleich nähert sich die Auslaugungseffizienz durch Auswaschung von P₂O₅ und F während der Umkristallisation an ein Maximum an. Die Auslaugungseffizienz steigt nach Erreichen des maximalen Umsatzes zum Anhydrit lediglich gering weiter an. Die Effizienz der F-/P₂O₅-Auswaschung ist wiederum ein wesentlicher Kennwert für die Qualität des aus dem Phosphorgips herzustellenden Zementklinkers, da der F-/P₂O₅-Gehalt u.a. die Eigenschaften des Klinkers maßgeblich beeinflusst. Aus verfahrensökonomischer Sicht ist es zweckdienlich einen gegebenen Prozess so kurz wie möglich zu betreiben, um möglichst hohe umgesetzte Mengenströme zu ermöglichen. So ist es im erfindungsgemäßen Verfahren bei gewünschter Maximierung der F-/P₂O₅-Auslaugung ebenfalls sinnvoll die Reaktionszeit der Umkristallisation so gering wie möglich zu halten, um den Umsatz an Dihydrat und/oder Hemihydrat zum Anhydrit und damit die Produktionskapazität zu maximieren. Zeitgleich bedarf es einer Mindestdauer der Umkristallisation um die notwendigen Randparameter wie bspw. der F-/P₂O₅-Auslaugung auf ein gewünschtes Niveau zu bringen. Das prozessökonomische Optimum lässt sich folglich identifizieren als ein Zeitintervall um den Zeitpunkt t_{MIN}, wobei t_{MIN} gekennzeichnet ist durch das Vorliegen der minimalen Säurekonzentration während der Umkristallisation von Dihydrat und/oder Hemihydrat zu Anhydrit. In einer bevorzugten Ausführungsform sollte folglich der Trennprozess nach Schritt d) innerhalb dieses Zeitintervalls um t_{MIN} gestartet werden.

Erfindungsgemäß wird daher die Abtrennung des Kalziumsulfates aus der Suspension in Schritt d) (bzw. des Feststoffes von der flüssigen Phase der Suspension aus Schritt c)) um einen Zeitpunkt in einem Bereich von t_{MIN} + 30 Minuten bis t_{MIN} - 30 Minuten, bevorzugter in einem Bereich von t_{MIN} + 25 Minuten bis t_{MIN} - 25 Minuten, noch bevorzugter in einem Bereich von t_{MIN} + 20 Minuten bis t_{MIN} - 20 Minuten, noch bevorzugter in einem Bereich von t_{MIN} + 15 Minuten bis t_{MIN} - 15 Minuten, am meisten bevorzugt in einem Bereich von t_{MIN} + 10 Minuten bis t_{MIN} - 10 Minuten gestartet, wobei t_{MIN} definiert ist als der Zeitpunkt, bei welchem die Säurekonzentration während der Behandlung in Schritt c) ein Minimum durchläuft.

Die Anfangssäurekonzentration ist die Säurekonzentration, die in einem Zeitraum von bis zu einer Minute nach Zugabe der Säure, die in Schritt c) zur Behandlung zugegeben wird, gemessen wird.

Wie vorstehend erörtert verringert sich die Säurekonzentration im Verlauf der Behandlung bis zu einer minimalen Säurekonzentration C_{MIN} zum Zeitpunkt t_{MIN} und steigt dann wieder an. Die Säurekonzentration und der zeitliche Verlauf können nach üblichen, nachstehend beschriebenen Analysemethoden bestimmt werden, wobei für die Berechnung vereinfacht unterstellt wird, dass die gemessene Säurekonzentration vollständig auf die zur Behandlung zugegebene Säure zurückzuführen ist.

Auch wurde gefunden, dass der Zeitpunkt des oben beschriebenen prozessökonomischen Optimums sich weiterhin durch eine Abnahme der Säurekonzentration ermitteln lässt, welche zumindest um ein Mindestmaß ihrer Anfangssäurekonzentration vermindert wurde. Auch hier steht die Verdünnung der Säure für den Fortschritt der Umkristallisation und somit für ein erzieltes Maß der F-/P₂O₅-Auslaugung. Somit ergibt sich ein Zeitintervall um den Zeitpunkt t₁, wobei t₁ charakterisiert ist als der Zeitpunkt, bei welchem die Säurekonzentration während der Umkristallisation von Dihydrat und/oder Hemihydrat zu Anhydrit in Schritt c) zumindest um 1,0 %, bevorzugter mindestens 2,0 %, weiter bevorzugt mindestens 4,0 %, weiter bevorzugt mindestens 5,0% und weiter bevorzugt mindestens 7,0 % ihrer Anfangssäurekonzentration vermindert wurde. In einer weiteren bevorzugten Ausführungsform sollte folglich der Trennprozess nach Schritt d) innerhalb dieses Zeitintervalls um t₁ gestartet werden.

In einer bevorzugten Ausführungsform wird daher die Abtrennung des Kalziumsulfates aus der Suspension in Schritt d) um einen Zeitpunkt in einem Bereich von t₁ + 20 Minuten bis t₁ - 20 Minuten, bevorzugt in einem Bereich von t₁ bis t₁ + 20 Minuten, gestartet, wobei t₁ definiert ist als der Zeitpunkt, bei welchem die Säurekonzentration während der Behandlung in Schritt c) zumindest um 1,0%, bevorzugt zumindest um 4,0%, ihrer Anfangssäurekonzentration vermindert wurde.

Im Hinblick auf die Anfangssäurekonzentration und die Säurekonzentration während der Behandlung gilt das vorstehend Gesagte. Eine Verminderung der Anfangssäurekonzentration um 1% zum Zeitpunkt t₁ bedeutet dabei, dass die Säurekonzentration 99% der Anfangssäurekonzentration beträgt.

In einer bevorzugten Ausgestaltung wird hinsichtlich des Zeitintervalls t₁ die Anfangssäurekonzentration um 1,0 bis 15,0 %; 3,0 bis 12,0 %; 4,0 bis 10,0 %; 4,5 bis 10,0 %; 5,0 bis 9,0 %; 5,0 bis 8,5 %; 5,5 bis 8,0 %; 6,0 bis 8,0 % vermindert, wobei es bevorzugt ist, dass die die Abtrennung des Kalziumsulfates aus der Suspension in Schritt d) zu einem Zeitpunkt gestartet wird, bei der die Verminderung der Säurekonzentration in einem der genannten Bereiche liegt.

Für die Zeitpunkte t_{MIN} und t₁ gilt, dass t₁ je nach Definition des prozessökonomischen Optimums kleiner (z.B. Maximierung der Umsatzrate bei Mindestanforderung an die P₂O₅-Auslaugung bezüglich Zementklinkerqualität), größer (z.B. Maximierung der P₂O₅-Auslaugung und damit Effizienzsteigerung einer integrierten Phosphorsäureanlage) oder gleich t_{MIN} (z.B. effiziente P₂O₅-Auslaugung bei möglichst optimaler Filtrierbarkeit) sein kann.

In einer weiteren bevorzugten Ausführungsform ist es vorteilhaft den Trennprozess d) des erfindungsgemäßen Verfahrens zur Trennung des Feststoffes von der flüssigen Phase der Suspension aus Schritt c) zu einem Zeitpunkt in einem Bereich von t₁ + 30 Minuten bis t₁ - 30 Minuten, bevorzugt in einem Bereich von t₁ bis t₁ + 30 Minuten, bevorzugter in einem Bereich von t₁ + 25 Minuten bis t₁ - 25 Minuten, bevorzugt in einem Bereich von t₁ bis t₁ + 25 Minuten, noch bevorzugter in einem Bereich von t₁ + 20 Minuten bis t₁ - 20 Minuten, bevorzugt in einem Bereich von t₁ bis t₁ + 20 Minuten, insbesondere bevorzugt in einem Bereich von t₁ + 15 Minuten bis t₁ - 15 Minuten, bevorzugt in einem Bereich von t₁ bis t₁ + 15 Minuten, am bevorzugtesten in einem Bereich von t₁ + 10 Minuten bis t₁ - 10 Minuten, bevorzugt in einem Bereich von t₁ bis t₁ + 10 Minuten durchzuführen.

In einer weiteren bevorzugten Ausführungsform kann die Einleitung des besagten Trennprozesses des Feststoffes von der flüssigen Phase der Suspension aus Schritt c) nach Schritt d) 20 Minuten, 15 Minuten oder aber 10 Minuten vor Erreichen der minimalen Säurekonzentration erfolgen. Die Einleitung des Trennprozesses nach Schritt d) kann weiterhin 5 Minuten, 10 Minuten oder 15 Minuten nach Erreichen der minimalen Säurekonzentration erfolgen. Die Einleitung des Trennprozesses nach Schritt d) kann auch bevorzugt in einem Zeitintervall von 20 Minuten vor und 10 Minuten nach, oder 15 Minuten vor und 5 Minuten nach, oder 10 Minuten vor und 5 Minuten nach Erreichen der minimalen Säurekonzentration erfolgen.

In einer weiteren bevorzugten Ausführungsform kann die Einleitung des besagten Trennprozesses des Feststoffes von der flüssigen Phase der Suspension aus Schritt c) nach Schritt d) 20 Minuten, 15 Minuten, 10 Minuten oder aber 5 Minuten vor Erreichen des Zeitpunktes t₁ erfolgen. Auch kann der besagte Trennprozess 5 Minuten, 10 Minuten oder aber 15 Minuten nach Erreichen des Zeitpunktes t₁ erfolgen. Der Trennprozess kann in einer bevorzugten Ausführungsform in einem Zeitintervall von 15 Minuten vor und 10 Minuten nach t₁, oder 10 Minuten vor und 10 Minuten nach t₁, oder 10 Minuten vor und 5 Minuten nach t₁ oder 5 Minuten vor und 10 Minuten nach t₁ oder 5 Minuten vor und 5 Minuten nach t₁ erfolgen.

Die Bestimmung der Säurekonzentration, einschließlich der minimalen Säurekonzentration, kann sowohl kontinuierlich als auch diskontinuierlich erfolgen. Die Messung und/oder Bestimmung der minimalen Säurekonzentration kann direkt oder indirekt erfolgen. Für die Messung kann eine on-line und/oder off-line Analytik genutzt werden. Zur Bestimmung der Säurekonzentration können bspw. Verfahren wie Säure-Base-Titration (z.B. potentiometrisch, thermometrisch oder mittels Säure-Base Indikator, etc.), Bestimmung des pH-Werts der Säure oder einer definierten Verdünnung der Säure, Dichte-Bestimmung der Säure und/oder kombinierte Verfahren aus Dichte und/oder Schallgeschwindigkeit und/oder Brechungsindex eingesetzt werden. Die gewählten Beispiele zur Säurebestimmung sollen den Umfang der beanspruchten Erfindung in keiner Weise einschränken.

Die Säurekonzentration wird in einer bevorzugten Ausführungsform durch zumindest eine Messvorrichtung in dem Reaktionsbehältnis oder einem Kreislaufstrom des Reaktionsbehältnisses bestimmt. Generell wird die Säurekonzentration direkt oder indirekt gemessen oder berechnet, wobei die dafür notwendigen Parameter oder Messstellen an einem hierfür geeigneten Punkt im Prozess ermittelt werden. Dem Fachmann sind die Wahl der Mess- und Berechnungsmethoden als auch Positionierung der Messpunkte geläufig.

Vorteilhaft wird die Säurekonzentration entweder aktiv gemessen oder durch einen oder mehrere erfasste Prozessparameter direkt oder indirekt berechnet. Es ist ferner bevorzugt, dass die Behandlung in Schritt c) mittels eines Analyseverfahrens überwacht wird. Es ist ferner bevorzugt, dass das Analyseverfahren eine Änderung der Säurekonzentration der in Schritt c) eingesetzten Säure direkt und/oder indirekt bestimmen kann und/oder, dass das Analyseverfahren den P- und/oder F-Gehalt direkt und/oder die Mineralogie des Feststoffs ermitteln kann.

Es ist ferner bevorzugt, dass das verwendete Analyseverfahren eine Säure-Base Titration ist, wobei die Bestimmung des Äquivalenzpunkts der Säure bevorzugt mittels Potentiometrie und/oder Thermometrie und/oder eines Säure-Base Indikators durchgeführt wird. Es ist ferner bevorzugt, dass das verwendete Analyseverfahren eine pH-Werts Bestimmung der Säure und/oder eine pH-Werts Bestimmung einer definierten Verdünnung der Säure und/oder Dichte-Bestimmung der Säure und/oder ein kombiniertes Verfahren aus Dichte und/oder Schallgeschwindigkeit und/oder Brechungsindex ist. Es ist ferner bevorzugt, dass das Analyseverfahren ein on-line Verfahren, bevorzugt ein Prozessanalysator ist.

Es ist ferner bevorzugt, dass der Dᵥ(50)-Wert der Korngrößenverteilung des in Schritt d) erhaltenen Kalziumsulfats, insbesondere Kalziumsulfat-Anhydrits, im Bereich von 0,5 - 100µm, bevorzugt 1- 50µm, insbesondere 2-30µm, liegt.

Die aus der Behandlung nach Schritt c) resultierende Säure ist bevorzugt eine 1 bis 12 molare, bevorzugt 5 bis 8 molare, schweflige Säure oder eine 1 bis 12 molare, bevorzugt 5 bis 8 molare, Schwefelsäure. Die zugegebene Säure ist daher bevorzugt eine schweflige Säure oder eine Schwefelsäure.

Die Behandlung in Schritt c) wird bei Reaktionstemperatur im Bereich zwischen Umgebungstemperatur und Siedepunkt des Reaktionsgemisches durchgeführt, z.B. bei einer Temperatur im Bereich von 15°C bis 100°C, vorzugsweise 30°C bis 80°C, bevorzugter 45 bis 75°C.

Die Dauer der Behandlung in Schritt c) bzw. die Reaktions-Verweilzeit für die Einstellung der Gehalte an Verunreinigungen in der Säure liegt im Bereich von 5 Minuten bis 120 Minuten, bevorzugt von 15 bis 100 Minuten, insbesondere 15 bis 90 Minuten, besonders bevorzugt 20 bis 60 min.

In einer besonders bevorzugten Ausführungsform wird zur Behandlung eine 5 bis 8 molare Säure, insbesondere schweflige Säure und/oder Schwefelsäure, in einem S/L Verhältnis von 1/5 bis 1/1, bevorzugt 1/5 bis 1/1,3, bevorzugter 1/4 bis 1/2, verwendet, wobei die Behandlung bei einer Temperatur von 30 bis 80°C, bevorzugt 45 bis 75°C, und einer Verweilzeit von 15 bis 90 Minuten, bevorzugt 20 bis 60 min, durchgeführt wird. Die Reaktionsparameter werden dabei bevorzugt mittels einer on-line und/oder off-line Analytik, welche auf der Verdünnung der eingesetzten Säure durch frei werdendes Kristallwasser aufgrund der Umkristallisierung des Phosphorgipses zu zumindest teilweise Anhydrit beruht, eingestellt und optimiert. Dabei ist eine 5 bis 7 molare Säure und hohe Temperatur bevorzugt, um eine gute Trennung (z.B. bei Filtration) des gereinigten Kalziumsulfats zu erreichen, während bei höheren Konzentrationen (bspw. 6,5 - 8 molar) kürzere Verweilzeiten und/oder niedrigere Temperaturen ausreichen, um eine gleiche Reinigungseffizienz zu erzielen.

Eine gute Filtrierbarkeit wird unter anderem durch das Vorliegen größerer Kristalle ermöglicht. Um ein Kristallwachstum zu begünstigen sind einerseits niedrigere Temperaturen und/oder niedrigere Konzentration der Säure, insbesondere der Schwefelsäure, geeignet. Bezüglich des erfindungsgemäßen Verfahrens sind derartige Konstellation von Temperatur und Säurekonzentration zu bevorzugen, dass insbesondere Kalziumsulfat-Anhydrit ausgebildet wird.

Des Weiteren wird eine gute Filtrierbarkeit bei sonst gleichbleibenden Bedingungen dadurch begünstigt, dass die Verweilzeiten - ohne Einbußen der Auslaugungseffizienz - möglichst kurzgehalten werden. Der Endpunkt der Reaktion zur optimalen Filtrierbarkeit kann ebenfalls über die Bestimmung der Säurekonzentration ermittelt werden. Der vorherigen Definition von t_{MIN} folgend wurde festgestellt, dass eine optimale Filtrierbarkeit des gereinigten Kalziumsulfats bei Zeitintervallen kleiner oder gleich t_{MIN} (Zeitpunkt der minimalen Säurekonzentration) erzielt werden können.

Die Reinigungseffizienz, insbesondere hinsichtlich P- und F-Gehalt, steht wie oben beschrieben im direkten Zusammenhang zur Umkristallisation zu Kalziumsulfat-Anhydrit. Frei zugängliches Phosphat, insbesondere im Phosphorgips verbliebene Rest-Phosphorsäure, ist bereits bei kurzer Verweilzeit und/oder mit niedrigen Säurekonzentrationen und/oder mit hohem S/L-Verhältnis einfach zu entfernen. Dabei muss es zu keiner Umkristallisation bei Einsatz von verunreinigtem Kalziumsulfat-Dihydrat kommen. Für eine bessere Reinigungseffizienz des Phosphorgipses ist bevorzugt eine höhere Säurekonzentration und/oder höhere Temperatur und/oder kleineres S/L-Verhältnis zu wählen. Dadurch wird die Umwandlung zu zumindest teilweise Anhydrit begünstigt.

Die Bestimmung der Säurekonzentration über den zeitlichen Verlauf der Reaktion bei gewählter Reaktionsbedingung wie Anfangskonzentration der Säure, Reaktionstemperatur und S/L-Verhältnis kann im Vorfeld zum Beispiel in einem Labor (off-line) durchgeführt werden, um ideale Reaktionsparameter für den Prozess zu ermitteln.

In einer bevorzugten Ausführungsform wird die Bestimmung der Säurekonzentration über den zeitlichen Verlauf der Reaktion während der Produktion durchgeführt. Dabei kann die Säurekonzentration off-line (z.B. im Labor) und/oder on-line (z.B. durch einen On-line Analysator) ermittelt werden. Der Vorteil dieser Ausführungsform ist, dass der Prozess direkt überwacht werden kann und auf Produktionsschwankungen (z.B. Verunreinigung, Restfeuchte und/oder Gesamtwassergehalt des Phosphorgipses, Temperaturschwankungen im Prozess, Wasserbilanz des Gesamtkomplexes, etc.) mit geeigneten Anpassungen der Reaktionsparameter reagiert werden kann.

Während der Behandlung von Schritt c) wird die Suspension bzw. das Reaktionsgemisch zur Einstellung der Gehalte an Verunreinigungen bevorzugt in Bewegung gehalten, zum Beispiel durch Zirkulieren, Rühren oder Einblasen von Gas.

Für den Schritt c) wird das in der Phosphorsäureproduktion generierte Kalziumsulfat aus der ersten Trenneinheit, bevorzugt Filtrationseinheit, und/oder das Kalziumsulfat von einer Halde, bevorzugt von einer Halde aus der Phosphorsäureproduktion, einer Aufreinigungseinheit (Kalziumsulfat-Reaktionseinheit) zugeführt. Zusätzlich oder alternativ kann in Schritt e2) die P₂O₅-haltige flüssige Phase, bevorzugt ein Säurefiltrat, erhalten aus Schritt d) dazu verwendet werden, um Kalziumsulfat von der Halde aufzureinigen (Schritt c). Die resultierende Suspension kann dann wiederum dem Schritt d) zur Abtrennung des Feststoffs von der flüssigen Phase zugeführt werden. Bei der Aufreinigungseinheit für Schritt c) kann es sich um eine einfache Rühreinrichtung handeln, z.B. Rührbehälter.

In einer Ausführungsform des erfindungsgemäßen Verfahrens kann die Aufreinigung des Kalziumsulfates von einer Halde, bevorzugt einer Halde aus einer Phosphorsäureproduktion, und die Aufreinigung des Kalziumsulfates aus der ersten Trenneinheit in unterschiedlichen Aufreinigungseinheiten erfolgen.

In Schritt d) des erfindungsgemäßen Verfahrens wird das gereinigte Kalziumsulfat nach der Behandlung als Feststoff von der flüssigen Phase der erhaltenen Suspension abgetrennt. Bei der erhaltenen Suspension kann es sich um eine Aufschlämmung handeln. Die Abtrennung von Feststoff bzw. gereinigtem Kalziumsulfat und flüssiger Phase aus der Suspension ist insbesondere eine mechanische Trennung und kann z.B. durch Zentrifugation oder Filtration erfolgen, wobei Filtration bevorzugt ist.

Das in Schritt d) erhaltene gereinigte Kalziumsulfat, wie es nach der Abtrennung erhalten wird, kann Dihydrat, Hemihydrat, Anhydrit oder als eine Mischung aus zumindest zwei der besagten Komponenten vorliegen, bevorzugt ist Kalziumsulfat

in Form von Anhydrit. Die gewünschte Zusammensetzung des Kalziumsulfates ist abhängig von dem erforderlichen (Zement-/Klinkerproduzent) und/oder gewünschten (Phosphorsäureproduzent) Maß der P₂O₅-Reduktion. Durch die Behandlung mit Säure und anschließender Abtrennung von der flüssigen Phase kann insbesondere der Gehalt an Phosphor und Fluor im Kalziumsulfat reduziert werden, die als Verunreinigungen enthalten sind. Bei der abgetrennten flüssigen Phase handelt es sich in der Regel um eine säurehaltige wässrige Lösung, enthaltend unter anderem Wasser und P₂O₅.

In einer bevorzugten Ausführungsform enthält das in Schritt d) erhaltene abgetrennte gereinigte Kalziumsulfat mindestens 5, bevorzugt mindestens 30 Gew.-%, bevorzugter mindestens 50 Gew.-% Anhydrit, bezogen auf trockenes Kalziumsulfat.

Der Dᵥ(50)-Wert der Korngrößenverteilung des in Schritt d) produzierten Kalziumsulfats, insbesondere Kalziumsulfat-Anhydrits, nach der Aufreinigung beträgt z.B. 0,5 - 100µm, besonders bevorzugt 1- 50µm, insbesondere 2-30µm. Definiert wird der Dᵥ(50)-Wert als Maß, bei welchem 50 Vol.-% der Partikel einen größeren Durchmesser als der angegebene Wert aufweisen.

Das in Schritt d) erhaltene abgetrennte gereinigte Kalziumsulfat kann, gegebenenfalls nach Trocknung, einen Feuchtigkeitsgehalt im Bereich von 0 bis 60 Gew.-%, bevorzugt von 10 bis 50 Gew.-%, aufweisen. Der Wassergehalt bezieht sich auf freies Wasser, eventuell vorhandenes Hydratwasser ist nicht berücksichtigt.

In einer bevorzugten Ausführungsform wird in Schritt d) die flüssige Phase, die nach Abtrennung des Feststoffs erhalten wird, als Einsatzstoff in der Phosphorsäureproduktion Schritt a) verwendet. Alternativ oder zusätzlich kann die flüssige Phase vor dem Einsatz in der Phosphorsäureproduktion nach Schritt a) auch zur Behandlung von Phosphorgips von der Halde verwendet werden und nach anschließender Trennung wie in Schritt d als Einsatzstoff der Phosphorsäureproduktion nach Schritt a) zugeführt werden. Die flüssige Phase bzw. das Filtrat kann in der existierenden Phosphorsäureproduktion, insbesondere in dem existierenden Phosphorsäure-Schwefelsäure-Komplex, verwendet werden als sogenannte "Recycle Acid" (Rücklaufsäure), die der Reaktionseinheit der Phosphorsäureproduktion für die Umsetzung mit dem Rohphosphat zugeführt werden kann.

Für den Schritt d) wird die in der Aufreinigungseinheit enthaltene Suspension/Aufschlämmung in eine zweite Trenneinheit (Kalziumsulfat-Trenneinheit) überführt, in der die Flüssigkeit und der resultierende Feststoff (gereinigtes Kalziumsulfat) voneinander getrennt werden können. Die zweite Trenneinheit kann z.B. eine Filtrationseinheit oder eine Zentrifugeneinheit sein, wobei eine Filtrationseinheit bevorzugt ist.

In einer Ausführungsform des erfindungsgemäßen Verfahrens kann die Trennung der erhaltenen Suspension/Aufschlämmung des Kalziumsulfates von einer Halde, bevorzugt einer Halde einer Phosphorsäureproduktion, und die Trennung der erhaltenen Suspension/Aufschlämmung des Kalziumsulfates aus der ersten Trenneinheit in unterschiedlichen Kalziumsulfat-Trenneinheiten (folglich verschiedene zweite Trenneinheiten) erfolgen. Für diese Ausführungsform ist es bevorzugt, dass die Aufreinigung des Kalziumsulfates von einer Halde, bevorzugt einer Halde aus einer Phosphorsäureproduktion, und die Aufreinigung des Kalziumsulfates aus der ersten Trenneinheit in unterschiedlichen Aufreinigungseinheiten erfolgt.

Durch die Behandlung mit verdünnter Säure und anschließender Abtrennung von der flüssigen Phase kann der Gehalt an Phosphor und Fluor und anderen Verunreinigungen, wie z.B. Schwermetalle, radioaktive Komponenten, Seltene Erden (Lanthanide), Spurenelemente, im Kalziumsulfat reduziert werden. Das erfindungsgemäße Verfahren ermöglicht die Herstellung der für den Klinker-/Zementprozess erforderlichen Qualität des als Einsatzprodukt dienenden Kalziumsulfates. Die Gehalte der Verunreinigungen können flexibel eingestellt werden. Von den im Kalziumsulfat enthaltenen Verunreinigungen können vorzugsweise gezielt die Komponenten Phosphor und Fluor auf die geforderten Gehalte eingestellt werden.

Als abgetrenntes gereinigtes und aufbereitetes Kalziumsulfat kann direkt das in Schritt d) erhaltene abgetrennte gereinigte Kalziumsulfat verwendet werden. Es ist aber auch möglich, dass das in Schritt d) erhaltene gereinigte Kalziumsulfat einer oder mehreren weiteren Reinigungsschritten unterworfen wird, insbesondere zur Entfernung von Seltenen Erden und gegebenenfalls zur Entfernung von radioaktiven Elementen und/oder Schwermetallen, wie z.B. Cd, Pb, Hg, insbesondere bevor das gereinigte Kalziumsulfat dem Schritt e) zugeführt wird. Die optionalen zusätzlichen Reinigungsschritte werden nachstehend erläutert.

Das nach Schritt d) erhaltene und im Falle des umfassenderen erfindungsgemäßen Verfahrens in Schritt e) eingesetzte Kalziumsulfat ist in der Regel trocken bzw. getrocknet, wobei der Wassergehalt vorzugweise unter 15 Gew.-%, bevorzugt unter 10 Gew.-%, bevorzugter unter 5 Gew.-%, noch mehr bevorzugt unter 1 Gew.-% und am bevorzugtesten unter 0,1 Gew.-% liegt. Der Wassergehalt bezieht sich hier nur auf freies Wasser, eventuell vorhandenes Hydratwasser ist nicht berücksichtigt.

Das nach Schritt d) erhaltene und im Falle des umfassenderen erfindungsgemäßen Verfahrens in Schritt e) verwendete gereinigte Kalziumsulfat weist bevorzugt einen P₂O₅-Gehalt von weniger als 0,5 Gew.-%, bevorzugt weniger als 0,25 Gew.-%, bevorzugter weniger als 0,05 Gew.-%, und einen Fluoridgehalt von weniger als 0,5 Gew.-%, bevorzugt weniger als 0,25 Gew.-%, bevorzugter weniger als 0,15 Gew.-%, noch bevorzugter von weniger als 0,05 Gew.-% auf. Ein gereinigtes Kalziumsulfat mit dem genannten Reinigungsgrad hinsichtlich P₂O₅ und Fluor wird bevorzugt bereits nach Schritt d) erhalten. Durch den Reinigungsschritt gemäß der Schritte c) und d) und gegebenenfalls dem Reinigungsschritt zur Entfernung von Seltenen Erden können gegebenenfalls auch im Kalziumsulfat enthaltene, unerwünschte Schwermetalle und/oder radioaktive Elemente, insbesondere radioaktive Elemente, vollständig oder teilweise entfernt werden.

In Schritt e) des erfindungsgemäßen Verfahrens wird das abgetrennte gereinigte und aufbereitete Kalziumsulfat mit Zusatzstoffen und Reduktionsmittel vermischt, um eine Rohmehlmischung für die Zementklinkerproduktion zu erhalten. Das Kalziumsulfat wird dabei mit den erforderlichen Zusatzstoffen für die geforderte Zementklinkerqualität im richtigen Verhältnis vermischt. Wie bereits angeführt, sind der Müller-Kühne-Prozess und der OSW-Krupp-Prozess für die Umsetzung von Kalziumsulfat mit Zusatzstoffen und Reduktionsmittel zu Zementklinker und SO₂ bzw. Schwefelsäure seit langem bekannt. Weitere Einzelheiten hierzu können der Fachliteratur entnommen werden, z.B. Ullmann's Encyclopedia of industrial chemistry, 5. Auflage, 1986, Bd. A5, "Cement and Concrete ", p. 489-537, oder die Patentschrift AT 292539 B.

Allgemein wird Zementklinker aus einem als Rohmehl bezeichnetes Rohstoffgemisch hergestellt, dass Calciumoxid, Siliciumdioxid sowie Oxide von Aluminium und Eisen enthält, siehe z.B. Ullmann's Encyclopedia of industrial chemistry, 5. Auflage, 1986, Bd. A5, "Cement and Concrete", S. 489-537.

Komponenten zur Herstellung des Rohmehls in Schritt e) können, neben gereinigtem Phosphorgips, die dem Fachmann bekannten Zusatzstoffe für die Klinkerzusammensetzung sein, die dem Kalziumsulfat zugemischt werden, wobei in der Rohmehlmischung die Kalziumkomponente vollständig von dem abgetrennten gereinigten Kalziumsulfat gebildet wird. Vollständig schließt hier nicht aus, dass Kalzium in den Zusatzstoffen enthalten sein kann, wobei Kalzium bevorzugt nur in geringen Mengen oder als Verunreinigungen in den Zusatzstoffen enthalten sein kann. Vollständig meint hier, dass mindestens 95 Gew.-%, bevorzugter mindestens 99 Gew.-%, noch mehr bevorzugt mindestens 99,9 Gew.-% der eingesetzten Kalziumkomponente, bevorzugt des im Zementklinker enthaltenen Kalziums, aus dem abgetrennten gereinigten Kalziumsulfat stammen. Daraus ergibt sich, das die eingesetzten Zusatzstoffe bevorzugt frei bzw. weitgehend frei von Kalzium sind. Es ist aber auch möglich, dass in den Zusatzstoffen Kalzium enthalten ist, z.B. im Al-Träger, Si-Träger und/oder Fe-Träger. Zusatzstoffe sind insbesondere Al-Träger, wie z.B. Bauxite, Tone und Tonsteine, Schiefer, etc., Fe-Träger, wie z.B. Eisenerze, Laterite, etc. und Si-Träger, wie z.B. Sande, Sandsteine, Quarzite, Tone und Tonsteine, Schiefer, etc. und ein oder mehrere Reduktionsmittel, wie z.B. einen Kohlenstoff-und/oder Kohlenwasserstoff-Träger, z.B. Kohle, Koks, Petrolkoks oder aus nachwachsenden Rohstoffen erzeugte Kohle/ Koks (Bio-Kohle/Koks) und/oder elementarer Schwefel.

Es versteht sich, dass die Art und die Menge der Zusatzstoffe so gewählt werden, dass sie zusammen mit dem Kalziumsulfat ein Rohmehl mit geeigneter chemischer Zusammensetzung für einen Zementklinker ergeben.

In einer bevorzugten Ausführungsform macht das für Schritt e) verwendete abgetrennte gereinigte Kalziumsulfat von Schritt d) mehr als 70 Gew.-%, bevorzugt mehr als 80 Gew.-%, bevorzugter mehr als 90 Gew.-%, des gesamten Kalziumsulfates in der Rohmehlmischung aus. Für den Rest des Kalziumsulfats in der in Schritt e) erhaltenen Rohmehlmischung, der nicht das in Schritt d) erhaltene abgetrennte gereinigte Kalziumsulfat ist, kann Kalziumsulfat von üblichen anderen Quellen eingesetzt werden.

Als Brennstoff eignen sich feste Brennstoffe, beispielsweise Kohle, Koks, Petrolkoks, feste Sekundärbrennstoffe bzw. Ersatzbrennstoffe, etc. sowie flüssige Brennstoffe, beispielsweise Öl, Schweröl, flüssige Sekundärbrennstoffe, etc. oder gasförmige Brennstoffe, beispielsweise Erdgas, Biogas, Wasserstoff, als auch eine Kombination aus vorgenannten Brennstoffen.

Additive und/oder Mineralisatoren zur beschleunigten Zersetzung des gereinigten Kalziumsulfates und/oder zur verbesserten Bildung von Klinkermineralien können ebenfalls zugesetzt werden.

Als Rohmehl für die Herstellung von Zementklinker wird die Mischung der Stoffe Kalziumsulfat, alle zementüblichen Zusatzstoffe und Additiven/Mineralisatoren incl. Reduktionsmittel bezeichnet.

Für die Rohmehlvorbereitung in Schritt e) wird das gereinigte Kalziumsulfat vorzugsweise auf eine gewünschte Restfeuchte getrocknet, z.B. in einem Trommeltrockner und/oder Flugsstromtrockner und/oder Wirbelschicht, wobei der Wassergehalt des getrockneten Kalziumsulfats z.B. unter 22 Gew.-%, bevorzugt 12 - 14 Gew.-%, bevorzugter unter 5 Gew.-%, noch mehr bevorzugt unter 1 Gew.-% liegt. Der Wassergehalt bezieht sich hier nur auf freies Wasser, eventuell vorhandenes Hydratwasser ist nicht berücksichtigt.

Das getrocknete Kalziumsulfat sowie alle übrigen Zusatzstoffe werden einem üblichen Lager und/oder Mischeinrichtung zugeführt. Hierfür kommen beispielsweise ein Längsmischbett und/oder Rundmischbett und/oder Wannenlager und/oder Freilager und/oder herkömmliche Silos, wie Tangentialmischsilo, Mehrzellensilo, Konussilo oder Mehrkammersilo zur Anwendung. Beispielsweise wird ein solches Mischbett in der DE 10252585 bzw. solche Silotypen die in der DE10118142 oder DE 10344040 näher beschrieben werden.

Die Rohmaterialien (Kalziumsulfat sowie Zusatzstoffe) werden separat oder gemeinsam auf die für den Klinkerprozess notwendige Feinheit vermahlen. Diese Zerkleinerung kann als Mahltrocknung ausgeführt werden, bei der Abwärme aus dem Prozess (z.B. vorgewärmte Gase) und/oder speziell zugeführte Wärme (z.B. Abgase eines Heißgaserzeugers) genutzt werden.

Für die Zerkleinerung kommen Zerkleinerungsaggregate wie wenigstens eine Vertikalrollenmühle und/oder eine Walzenpresse und/oder eine Rührwerkskugelmühle und/oder Kugelmühle und/oder Walzenschüsselmühle und/oder Stabmühle und/oder Magnetmühle zum Einsatz. Entsprechende Aggregate sind beispielsweise aus den Schutzrechten DE 102012111217, DE 102014108334 oder DE 102017114831 bekannt.

Die vermahlenen Rohmaterialien werden gemeinsam oder getrennt einem oder mehreren Silos zur Zwischenlagerung und / oder Homogenisierung zugeführt.

Die chemische Zusammensetzung der Rohmehlmischung wird vor Aufgabe auf den Klinkerprozess kontinuierlich überprüft und im Fall von Abweichungen von vorgegebenen Sollwerten durch Änderungen der Dosierungen korrigiert.

Das so vorbehandelte Rohmehl wird dosiert in die Klinkeranlage aufgegeben, ggf. zusammen mit Reduktionsmittel.

Das Reduktionsmittel dient zur Unterstützung der Abspaltung von SO₂ bei der thermischen Zersetzung des gereinigten Kalziumsulfates. Das Reduktionsmittel wird separat auf die notwendige Feinheit gebrochen und / oder vermahlen. Diese Zerkleinerung kann als Mahltrocknung ausgeführt werden. Das so vorbereitete Reduktionsmittel wird zusammen mit dem vorbehandelten Rohmehl der Klinkeranlage und/ oder separat an einer oder mehreren Stellen der Klinkeranlage zugeführt.

Alternativ kann das Rohmehl bei einem Flüssigkeitsanteil der Mischung von 9 Gew.-% - 22 Gew.-%, vorzugsweise zwischen 12 Gew.-% - 14 Gew.-%, einer formgebenden Einrichtung zur Erzeugung von Agglomeraten zugeführt werden. Diese Agglomerate können in einer separaten Einrichtung getrocknet und zwischengelagert werden. Das so agglomerierte Rohmehl wird dann der Vorwärmeinrichtung und dem Brennprozess zugeführt. Die Agglomerate weisen eine Größe von mehr als 250µm, vorzugsweise mehr als 500µm, bis in den niedrigen mm Bereich auf. Als formgebende Einrichtung können beispielsweise fungieren eine Presse und/oder ein Teller und/oder eine Trommel und/oder ein mechanischer Wirbelbettreaktor und/oder ein formgebender Rührwerksmischer.

In Schritt f) des erfindungsgemäßen Verfahrens wird das Rohmehl, das in Schritt e) hergestellt wird, durch einen thermischen Prozess, insbesondere in einer Zementklinker-Prozesseinheit, in Zementklinker umgewandelt, wobei Schwefeldioxid als Abgas gebildet wird. Der in Schritt f) erzeugte Zementklinker kann zur Zementherstellung verwendet werden.

In Schritt f) wird das Rohmehl vorzugsweise mit Prozessgasen aus dem Brenn- bzw. Kühlprozess zur Verringerung des Energieverbrauchs auf eine Temperatur von bis zu 800°C vorgewärmt und dabei anhaftende Oberflächenfeuchte ausgetrieben und die Zusatzstoffe zumindest teilweise kalziniert.

Bei weiterer Vorwärmung oberhalb von 800°C wird der Hauptteil des Kalziumsulfates unter Einwirkung des Reduktionsmittels unter Bildung von SO₂ zersetzt.

Die Vorwärmung und Zersetzung des Rohmehls kann z.B. in einem Wärmetauscher, vorzugsweise einem Flugstromwärmetauscher, durchgeführt werden.

Das SO₂ haltige Prozessgas wird dabei bevorzugt nach der Vorwärmeinrichtung durch ein Abscheidesystem abgesondert und einem Verwertungsprozess wie beispielsweise einer Schwefelsäureanlage zugeführt.

In einem nachfolgenden Schritt erfolgt die finale Zersetzung des Rohmehls und anschließende Bildung des Zementklinkers (Klinkerbrand); die Prozessgase dieses Schrittes werden dem Wärmetauscher zugeführt. Dieses Brennen des Rohmehls erfolgt in einem Ofen, vorzugsweise einem Drehrohrofen. Die Brenntemperatur zur Zementklinkerherstellung kann z.B. im Bereich von 1200°C bis 1600 °C liegen, bevorzugt bei einer Temperatur von 1200°C bis zu 1500°C. Die Brenndauer kann z.B. 5 Minuten bis 60 Minuten betragen.

In einer bevorzugten Ausführungsform wird das Rohmehl mit Prozessluft mit einem Sauerstoffanteil von mehr als 21 Vol.-%, bevorzugt mehr als 45 Vol.-%, bevorzugter mehr als 60 Vol.-%, und bis zu 100 Vol.-%, gebrannt. Entsprechende Prozessluft kann leicht durch Zumischen von Sauerstoff hergestellt werden. Hierbei ist eine besonders bevorzugte Ausführungsform der Oxyfuel-Prozess. Einzelheiten des Oxyfuel-Prozesses werden z.B. in EP 2449328 A1, EP 1037005 B1, WO 2019-211196 A1, WO 2019-211202 A1 oder JP 2007-126328 A beschrieben, worauf Bezug genommen wird.

Durch den Einsatz von mit Sauerstoff angereicherter Prozessluft kann die SO₂-Konzentration im Prozessgas erhöht werden, dies erleichtert die Gewinnung von Schwefelsäure aus SO₂-haltigen Gasen. Unterstützt durch weitere Maßnahmen zur Steigerung der SO₂-Konzentration im Prozessgas kann so eine bevorzugte SO₂-Konzentration im Prozessgas von 13 - 15%, bevorzugter von 18 - 20 % erreicht werden.

Die oben erwähnte Prozessluft kann im Vorfeld zum Kühlen des gebrannten Materials genutzt worden sein. Ebenso ist es denkbar, dass diese Prozessluft dem Ofen direkt zugeführt wird. Vorstellbar wäre ebenfalls, dass das Prozessgas an einem Bypass-System und/oder aus dem Flugstromreaktor wenigstens teilweise abgezogen wird, anschließend mit Sauerstoff angereichert und dem Brennprozess wieder zugeführt wird.

Der aus dem Ofen kommende Klinker wird vorzugsweise durch ein geeignetes Kühlsystem auf eine Temperatur von unter 120°C, vorzugsweise unter 100°C, abgekühlt. Die Kühlerabluft kann wenigstens teilweise dem Brennprozess und/oder dem Vorwärmprozess und/oder der Rohmehlherstellung und/oder der Kalziumsulfat-Trocknung zugeführt werden. Die dem Kühlsystem zugeführte Prozessluft kann, zumindest teilweise, mit Sauerstoff angereichert sein. Vorstellbar wäre ebenfalls, dass wenigstens ein Teil der Kühlerabluft zur Stromerzeugung genutzt wird. Das durch den Kühlprozess abgekühlte Material wird nach möglichen weiteren Prozessschritten einer Lager- und/oder Verpackungseinrichtung zugeführt.

Der so produzierte Zementklinker kann weiter zu Zement verarbeitet werden. Der nach diesem Verfahren hergestellte Zementklinker bzw. Zement weisen einen geringeren CO₂-Fußabdruck auf als ein üblicher, auf Basis carbonathaltiger Gesteine hergestellter Klinker bzw. Zement.

Die oben erwähnten Prozesse, wie z.B. der Einsatz von Phosphorgips als CO₂- neutralen Rohmaterial und die Verwendung des Oxyfuel-Prozesses senken den CO₂-Fußabdruck der Zementanlage. Weiterhin kann die Verwendung von wenigstens teilweise regenerativem Strom zum Betrieb der Anlageteile den CO₂-Fußabdruck weiter absenken.

In Schritt g) des erfindungsgemäßen Verfahrens wird das in Schritt f) gebildete Schwefeldioxid als Rohstoff einer Schwefelsäureproduktion zugeführt, um Schwefelsäure herzustellen, z.B. nach dem Single-Contact oder Double-Contact Verfahren. Die Schwefelsäureproduktion auf Basis von SO₂ ist dem Fachmann bestens bekannt. Einzelheiten hierzu können der Fachliteratur entnommen werden, z.B. Ullmann's Encyclopedia of industrial chemistry, 5. Auflage, 1994, Bd. A25, "Sulfuric Acid and Sulfur Trioxide", S. 635-705 oder Handbook of Sulphuric Acid manufacturing, Auflage 2008, DKL Engineering, ISBN 978-0-9738992-0-7.

Die in Schritt g) hergestellte Schwefelsäure kann z.B. in der Phosphorsäureproduktion als Einsatzmaterial für die Umsetzung mit dem Rohphosphat verwendet werden. Alternativ kann die produzierte Schwefelsäure je nach Bedarf einer weiteren bzw. anderen Nutzung zugeführt werden. Das behandelte Schwefeldioxid-Gas kann optional der in der Phosphorsäureproduktion existierenden oder einer neuen Schwefelsäureproduktionsanlage zugeführt werden.

In einer bevorzugten Ausführungsform wird das Schwefeldioxid, das in Schritt f) als Abgas aus der Zementklinker-Prozesseinheit abgeleitet wird, einer Schwefeldioxid-Abgasbehandlung zugeführt, bevor es der Schwefelsäureproduktion gemäß Schritt g) zugeführt wird. Bei der Abgasbehandlung handelt es sich bevorzugt um eine Abgasreinigung, um Feststoffpartikel und Restfeuchtigkeit aus dem SO₂-Gas zu entfernen.

In einer optionalen Variante des erfindungsgemäßen Verfahrens umfasst das Verfahren einen zusätzlichen Reinigungsschritt für das nach Schritt d) erhaltene Kalziumsulfat, der insbesondere dann durchgeführt wird, wenn das Kalziumsulfat anschließend mit den Zusatzstoffen und Reduktionsmittel gemäß dem Schritt e) vermischt wird. Bei diesem zusätzlichen Reinigungsschritt können Metalle der Seltenen Erden aus dem Kalziumsulfat ausgewaschen werden, die gegebenenfalls als Verunreinigung enthalten sind.

Bei dem optionalen zusätzlichen Reinigungsschritt zur Entfernung von Seltenen Erden aus dem Kalziumsulfat, insbesondere vor Zuführung zu Schritt e), wird das in Schritt d) erhaltene gereinigte Kalziumsulfat vorzugsweise mit einer Flüssigkeit, vorzugsweise Wasser oder mit einer wässrigen Lösung, die Salz und/oder Chelatligand enthält, behandelt. Nach der Behandlung wird von der so erhaltenen Suspension das Kalziumsulfat als Feststoff von der flüssigen Phase abgetrennt. Das so weiter gereinigte und abgetrennte Kalziumsulfat wird dann dem Schritt e) zugeführt. Die flüssige Phase enthält eine oder mehrere Seltene Erden als gelöste Ionen und kann zur Gewinnung der Seltenen Erden einer weiteren Aufbereitung zugeführt werden. Beispielsweise umfasst diese Aufbereitung die Überführung schwerlöslicher Selten Erd-Sulfate in lösliche Formen.

**Das erfindungsgemäße** Verfahren kann ferner dazu dienen, radioaktive Elemente und/oder Schwermetalle zu entfernen. Das erhaltene gereinigte Kalziumsulfat nach Schritt d) zeigt bei geeigneter Einstellung der Reaktionsbedingungen (S/L-Verhältnis, Verweilzeit, Konzentration der Säure und Temperatur) eine deutliche Abreicherung an radioaktiven Elementen, wie z.B. Thorium und Uran. Bei dem weiteren optionalen Reinigungsschritt zur Gewinnung von Seltenen Erden können des Weiteren Schwermetalle (und weitere radioaktive Bestandteile), wie z.B. Cadmium und Blei durch geeignete Wahl des Aufbereitungsschritts entfernt werden. Das gereinigte Kalziumsulfat kann vor der Zuführung zu Schritt e) daher einen reduzierten Gehalt an Phosphor und Fluor und gegebenenfalls an Seltenen Erden, radioaktiven Elementen und/oder Schwermetallen aufweisen. Es versteht sich, dass der reduzierte Gehalt des jeweiligen Elements sich auf den Vergleich zum Gehalt des jeweiligen Elements in dem Kalziumsulfat bezieht, das dem Schritt c) zugeführt wird.

Der integrative Ansatz bzw. das integrative Verfahren der Erfindung ist insbesondere gekennzeichnet durch folgende verfahrenstechnische Operationen, die beispielsweise in ihrer Gesamtheit oder optional für die Herstellung von Zementklinker/Zement und Schwefelsäure aus Kalziumsulfat kombiniert werden können:
∘ Chemische und thermische Modifikation des Phosphorsäureprozesses zur zielgerichteten Produktion einer für den Zementklinkerprozess geeigneten Phosphorgipsqualität und erhöhten Phosphorausbeute aus dem Rohphosphat
∘ Mechanische Abtrennung des Phosphorgips aus dem laufenden Phosphorsäureprozess, zum Beispiel durch Zentrifugieren, Filtrieren, Verdampfen oder Absetzen/Sedimentieren des Kalziumsulfat- /Phosphorgips-Schlamms
∘ Chemisch-thermische und mechanische Abtrennung von Phosphor aus dem Phosphorgips, zum Beispiel durch chemische Umwandlung, Rekristallisation, Fällung, Flockung,
∘ Chemisch-thermische und mechanische Abtrennung von Fluor aus dem Phosphorgips, zum Beispiel durch chemische Umwandlung, Rekristallisation, Fällung, Flockung,
∘ Chemisch-thermische und mechanische Abtrennung von radioaktiven Komponenten aus dem Phosphorgips, zum Beispiel durch chemische Umwandlung unter Heizen/Kühlen, Rekristallisation, Fällung, Flockung,
∘ Chemisch-thermische und mechanische Abtrennung von Schwermetallen aus dem Phosphorgips, zum Beispiel durch chemische Umwandlung unter Heizen/Kühlen, Rekristallisation, Fällung, Flockung,
∘ Chemisch-thermische und mechanische Abtrennung von Seltenen Erden aus dem Phosphorgips, zum Beispiel durch chemische Umwandlung unter Heizen/Kühlen, Rekristallisation, Fällung, Flockung,
∘ Chemische und/oder thermische und/oder mechanische Entwässerung des Phosphorgips, zum Beispiel durch Heizen/Kühlen, Flockung und Fällung, Filtration
∘ Mechanische Behandlung des trockenen Phosphorgips, zum Beispiel durch Zerkleinern, Sichtung,
∘ Mischen des Phosphorgips mit Additiven zu einer Rohmehlmischung zur Erzielung von spezifischen und handelsüblichen Zementklinker- /Zementqualitäten
∘ Thermische und mechanische Trennung des Schwefeldioxids aus der Rohmehlmischung im Rahmen des Brennprozesses bei der Zementklinkerproduktion
∘ Thermische und chemische Umwandlung der Rohmehlmischung in Zementklinker
∘ Chemische und mechanische Umwandlung des Zementklinkers in handelsübliche Zementqualität
∘ Trocken- und nasschemische Reinigung des abgetrennten Schwefeldioxid-haltigen Abgases, zum Beispiel durch Elektrofiltration, Absorption
∘ Chemisch und thermische Modifikation des Schwefelsäureprozesses zur Einbindung und Verwendung des generierten Schwefeldioxids in Anlagen zur Erzeugung von Schwefelsäure
∘ Chemische Umwandlung des gereinigten Schwefeldioxid-haltigen Abgases in Schwefelsäure handelsüblicher und im Phosphorsäureprozess wiederverwendbarer Qualität, zum Beispiel nach dem Single-Contact oder Double-Contact Verfahren.

Je nach vorliegender Qualität des eingesetzten Rohphosphats und des daraus erforderlichen, resultierenden Kalziumsulfats müssen die Herstellungsverfahren in der Wahl der verfahrenstechnischen Operationen und Parameter flexibel gewählt und aufeinander abgestimmt werden.

Die aus dem Phosphorsäureprozess erzielte Qualität des Kalziumsulfats ist abhängig von Faktoren wie eingesetztes Rohphosphat, den Prozessbedingungen bei dem Aufschluss des Rohphosphats mit Schwefelsäure nach Schritt a) und von den Prozessbedingungen zur Reinigung/Erhöhung der P₂O₅-Ausbeute nach Schritt c).

Der Umfang der Reinigung, insbesondere hinsichtlich der Reduzierung des Gehalts an Phosphor und/oder Fluor, des Kalziumsulfats in Schritt c) kann unter Berücksichtigung der Verunreinigungen, die in den eingesetzten Zusatzstoffen enthalten sind, und der für den Zementklinker einzuhaltenden Richtwerten an Phosphor und Fluor, eingestellt werden. Die Richtwerte für Phosphor sind bevorzugt maximal 1,0 Gew.-%, bevorzugter maximal 0,5 Gew.-%, noch bevorzugter maximal 0,1 Gew.-% P₂O₅ und/oder die Richtwerte für Fluor sind bevorzugt maximal 0,5 Gew.-%, bevorzugter maximal 0,25 Gew.-%, noch bevorzugter maximal 0,1 Gew.-% F. Dies ist aufgrund des integrativen Ansatzes möglich, da alle Prozessschritte gemeinsam unter Berücksichtigung ihrer jeweiligen Anforderungen betrachtet werden. Die Einstellung des Reinigungsumfangs kann durch die Anpassung der Parameter in Schritt c), wie z.B. S/L-Verhältnis, Konzentration der Säure, Behandlungstemperatur und -dauer, erfolgen. Dabei wird die Reinigungseffizienz bevorzugt indirekt mittels on-line und/oder off-line Bestimmung der Säurekonzentration während der Auslaugungsreaktion des Kalziumsulfats in Schritt c) ermittelt.

Der Flüssigkeitshaushalt, insbesondere der Wasserhaushalt, einer Phosphorsäureproduktion wird durch das integrierte Verfahren nicht oder nur unwesentlich geändert, insbesondere da der Flüssigkeitseinsatz, insbesondere Wassereinsatz, zur Reinigung des Kalziumsulfats im Verfahren gemäß Schritt c) an den Flüssigkeitshaushalt, insbesondere Wasserhaushalt, einer Phosphorsäureproduktion gekoppelt werden kann. Der Flüssigkeitshaushalt bzw. Wasserhaushalt der Phosphorsäureproduktion umfasst die Flüssigkeit bzw. das Wasser, die bzw. das der Produktion zugeführt wird, und die Flüssigkeit bzw. das Wasser, die bzw. das aus der Produktion ausgeschleust wird. Änderungen im Flüssigkeitshaushalt, insbesondere Wasserhaushalt, haben einen signifikanten Einfluss auf die Effizienz der Prozessschritte in der Phosphorsäureproduktion.

Die Erfindung betrifft ferner eine Anlage zur Herstellung von Phosphorsäure und gereinigtem Kalziumsulfat durch Umsetzung von Rohphosphat mit Schwefelsäure, wobei die Anlage folgende Einrichtungen umfasst:
a) eine Reaktionseinheit, welche zumindest über
   i. eine Zufuhr von Rohphosphat und
   ii. zumindest einer Zuleitung von konzentrierter Schwefelsäure verfügt, wobei die besagte Reaktionseinheit konfiguriert ist, eine Suspension zumindest umfassend Phosphorsäure und Kalziumsulfat auszubilden, wobei das Kalziumsulfat in der Form von Dihydrat, Hemihydrat oder einer Kombination aus Hemihydrat und Dihydrat vorliegt, und die Reaktionseinheit einen Austritt für die besagte Suspension umfasst,
b) eine erste Trenneinheit, welche konfiguriert ist, die Suspension aus Reaktionseinheit a), umfassend das Kalziumsulfat aus Schritt a), als Feststoff von der flüssigen Phase abzutrennen und die Trenneinheit zumindest einen Austritt für die im wesentlichen Feststoff enthaltene Phase und einen Austritt für die im wesentlichen Flüssigkeit enthaltenden Phase umfasst, wobei die besagte Trenneinheit mit der besagten Reaktionseinheit aus Schritt a) fluidisch verbunden ist,
c) eine Aufreinigungseinheit, welche fluidisch mit der ersten Trenneinheit b) verbunden ist und zumindest über eine Zufuhr für eine Säure verfügt, wobei die Aufreinigungseinheit dazu konfiguriert ist, das in b) abgetrennte Kalziumsulfat und/oder Kalziumsulfat/Phosphorgips von einer Halde mit der der Aufreinigungseinheit zugeführten Säure in eine Suspension zu überführen, wobei die Suspension zumindest Kalziumsulfat und eine P₂O₅-haltige Säure-Lösung umfasst und die Aufreinigungseinheit weiterhin über eine Austrittsleitung für die Suspension verfügt,
d) eine zweite Trenneinheit, konfiguriert zum Behandeln der Suspension aus c), wobei die zweite Trenneinheit über zumindest einen Austritt für die P₂O₅-haltige Säure-Lösung und zumindest einen Austritt für festes Kalziumsulfat verfügt, wobei die zweite Trenneinheit stromabwärts der besagten Aufreinigungseinheit angeordnet ist und
e)
   e1) zumindest eine fluidische Verbindung, konfiguriert für eine Rückführung der P₂O₅-haltigen Säure-Lösung von der zweiten Trenneinheit aus d) stromaufwärts der besagten Reaktionseinheit aus Schritt a) oder zu der Reaktionseinheit aus Schritt a) vorgesehen ist, und/oder
   e2) zumindest eine fluidische Verbindung ausgehend von der zweiten Trenneinheit aus d) und einem Abschnitt stromaufwärts der zweiten Trenneinheit aus Schritt d) und stromabwärts der ersten Trenneinheit aus Schritt b) vorgesehen ist.

Die Anlage kann für die vorstehend beschriebenen erfindungsgemäßen Verfahren verwendet werden. Für Angaben zu den einzelnen Einrichtungen bzw. Einheiten wird auf die vorstehenden Angaben hierzu verwiesen. Die vorstehenden Angaben für das bzw. die Verfahren gelten entsprechend für die Anlage(n). Die erfindungsgemäßen Verfahren wie vorstehend und in den Ansprüchen ausgeführt werden bevorzugt in der vorliegenden Beschreibung und in den Ansprüchen ausgeführten Anlagen durchgeführt.

Unter einer Reaktionseinheit, beispielsweise einer Rohphosphat-Reaktionseinheit wird nach den erfindungsgemäßen Verfahren und Anlagen eine Reaktionseinheit verstanden, welche über eine Aufschluss-Einheit und eine Kristallbildungs-Einheit verfügt. Beide Einheiten können sowohl separat, als auch in einem Apparat, beispielweise einem Behälter, inkludiert sein.

Es ist bevorzugt, dass bei den erfindungsgemäßen Anlagen die zweite Trenneinheit bzw. Kalziumsulfat-Trenneinheit fluidisch, beispielsweise über eine Rohrleitung, mit der Reaktionseinheit einer bestehenden und/oder einer neuen Phosphorsäureproduktionsanlage oder einer Reaktionseinheit des erfindungsgemäßen Verfahrens (nach Schritt a)) verbunden ist, damit die in der Kalziumsulfat-Trenneinheit erhaltene flüssige Phase als Einsatzstoff in die Phosphorsäureproduktion eingebracht werden kann.

Es ist bevorzugt, dass bei der erfindungsgemäßen Anlage das abgetrennte Kalziumsulfat für Schritt c) von einer Trenneinheit einer bestehenden Phosphorsäureproduktion oder von der Trenneinheit des Verfahrens zur Phosphorsäureproduktion nach Schritt b), die die Phosphorsäure von dem Kalziumsulfat trennt, oder von einer Halde von Kalziumsulfat aus der Phosphorsäureproduktion zugeführt werden kann.

In einer Ausgestaltung der erfindungsgemäßen Anlage wird die abgetrennte P₂O₅-haltige Säure-Lösung einer Aufreinigungseinheit nach Schritt c) zugeführt. Hierbei kann die Anlage über eine zweite Kalziumsulfat-Reaktionseinheit (16) verfügen, welche dazu konfiguriert ist Kalziumsulfat/Phosphorgips von einer Halde mit der P₂O₅-haltigen Säure-Lösung aus Schritt d) und/oder einer P₂O₅-haltigen Säure-Lösung aus einer zusätzlichen zweiten Trenneinheit bzw. zusätzlichen Kalziumsulfat-Trenneinheit (6') zu behandeln und in eine Suspension aus zumindest Kalziumsulfat und der P₂O₅-haltigen Säure-Lösung zu überführen. Hierbei verfügt die besagte zweite Kalziumsulfat-Reaktionseinheit (16) über einen Austritt für die besagte Suspension.

In einer weiteren Ausgestaltung der erfindungsgemäßen Anlage verfügt diese über eine zweite Trenneinheit bzw. Kalziumsulfat-Trenneinheit (6') welche speziell für die Behandlung der besagten Suspension, entstanden aus dem Kalziumsulfat/Phosphorgips von der Halde, konfiguriert ist. Diese zweite Trenneinheit bzw. Kalziumsulfat-Trenneinheit (6') kann als parallele zweite Trenneinheit bzw. Kalziumsulfat-Trenneinheit zu einer zweiten Trenneinheit nach Schritt d) vorliegen. Diese zweite Trenneinheit (6') verfügt zumindest über eine Zuleitung für die besagte Suspension aus der zweiten Kalziumsulfat-Reaktionseinheit (16), zumindest einen Austritt für abgetrenntes Kalziumsulfat und zumindest einen Austritt für die abgetrennte P₂O₅-haltige Säure-Lösung. Diese Ausgestaltung der erfindungsgemäßen Anlage sieht optional weiterhin eine fluidische Verbindung von dem zumindest einem Austritt der P₂O₅-haltigen Säure-Lösung aus der besagten zweiten Trenneinheit (6') mit einer Reaktionseinheit einer Phosphorsäureanlage nach Schritt a) oder stromaufwärts der besagten Reaktionseinheit einer Phosphorsäureanlage vor. Dabei kann es sich um eine existierende oder neue Phosphorsäureanlage handeln. Diese Ausgestaltung der erfindungsgemäßen Anlage sieht optional weiterhin eine fluidische Verbindung für die P₂O₅-haltige Säure Lösung ausgehend von der zweiten Trenneinheit bzw. Kalziumsulfat-Trenneinheit (6') zu einer Aufreinigungseinheit nach Schritt c) oder Kalziumsulfat-Reaktionseinheit (5) vor.

In einer weiteren Ausgestaltung der erfindungsgemäßen Anlage liegen neben der zumindest einen Zuleitung von konzentrierter Schwefelsäure in Schritt a) optional zumindest eine Zuleitung von konzentrierter Schwefelsäure zu der Aufreinigungseinheit nach Schritt c) bzw. Kalziumsulfat-Reaktionseinheit und/oder zumindest eine Zuleitung von konzentrierter Schwefelsäure zu einer zweiten Kalziumsulfat-Reaktionseinheit (16), konfiguriert für die Behandlung von Kalziumsulfat/Phosphorgips von einer Halde, bevorzugt einer Halde einer Phosphorsäureproduktion, vor.

In einer weiteren Ausgestaltung der erfindungsgemäßen Anlage können einzelne oder mehrere der genannten fluidischen Verbindungen wahlweise direkt mit den besagten apparativen Einheiten oder jedoch, insofern technologisch sinnvoll und möglich, stromaufwärts oder stromabwärts der besagten apparativen Einheiten mit vorliegenden Stoffströmen gekoppelt werden um Medien durch die fluidischen Verbindungen den apparativen Einheiten zuzuführen.

Nachfolgend wird die Erfindung anhand von Ausführungsbeispielen beschrieben, die anhand der Figuren näher erläutert werden. Die Ausführungsbeispiele sollen den Umfang der beanspruchten Erfindung in keiner Weise beschränken.
- Fig. 1: zeigt ein schematisches Fließbild zur Aufarbeitung von Kalziumsulfat aus der Phosphorsäureproduktion nach einem Teilschritt des erfindungsgemäßen Verfahrens.
- Fig. 2: zeigt ein schematisches Fließbild zur Verwertung von Kalziumsulfat aus der Phosphorsäureproduktion mithilfe eines integrierten Komplexes zur Herstellung von Zementklinker und Schwefelsäure.
- Fig. 3: zeigt ein schematisches Fließbild zur Verwertung von Kalziumsulfat aus der Phosphorsäureproduktion mithilfe eines integrierten Komplexes zur Herstellung von Zementklinker und Schwefelsäure wie in Fig. 2, wobei zusätzlich alternative oder zusätzliche Prozessschritte gezeigt sind.
- Fig. 4: zeigt ein schematisches Fließbild eines neuen integrativen Gesamtkomplexes zur Herstellung von Phosphorsäure, Zementklinkergeeignetem Kalziumsulfat, Zementklinker und Schwefelsäure nach dem erfindungsgemäßen Verfahren, wobei zusätzlich alternative oder zusätzliche Prozessschritte gezeigt sind.
- Fig. 5: zeigt ein schematisches Fließbild eines neuen integrativen Gesamtkomplexes zur Herstellung von Phosphorsäure, Zementklinkergeeignetem Kalziumsulfat, Zementklinker und Schwefelsäure nach dem erfindungsgemäßen Verfahren, wobei zusätzlich bevorzugte Ausgestaltungen des Erfindungsgedankens gezeigt sind, welche einzeln oder kumuliert vorliegen können.
- Fig. 6: ist grafische Darstellung der Säurekonzentration über die Verweilzeit des Gipses des Gipses PG B in Schwefelsäure von Beispiel 9.
- Figur 7: ist eine grafische Darstellung der Säurekonzentration (linke Achse), des Anhydrit-Gehalts (rechte Achse) und der Auslaugungseffizienz hinsichtlich P2O5-Gehalt (rechte Achse) über die Verweilzeit des Gipses PG B in Schwefelsäure von Beispiel 9.
- Figur 8: ist eine grafische Darstellung der Säurekonzentration über die Verweilzeit des Gipses PG A in Schwefelsäure von Beispiel 10.
- Figur 9: ist eine grafische Darstellung der Zusammensetzung der Mineralogie (linke Achse) und der Auslaugungseffizienz hinsichtlich P2O5-Gehalt (rechte Achse) über die Verweilzeit des Gipses PG A in Schwefelsäure von Beispiel 10.

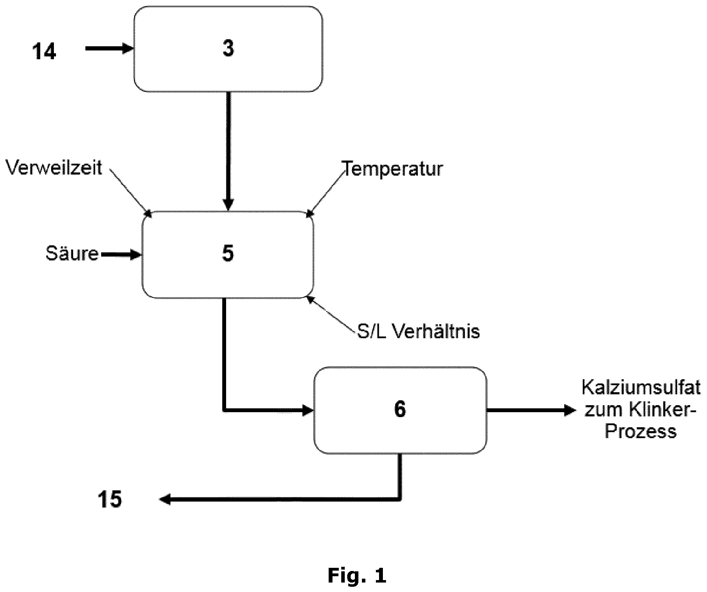

Fig. 1 zeigt ein Fließbild zur Aufarbeitung von Kalziumsulfat aus der Phosphorsäureproduktion nach dem erfindungsgemäßen Verfahren. Kalziumsulfat-Schlamm 14 aus der Rohphosphat-Reaktionseinheit der Phosphorsäureanlage wird in die erste Trenneinheit, bevorzugt Filtrationseinheit, 3 der Phosphorsäureanlage geleitet, wo das in der Rohphosphat-Reaktionseinheit generierte Kalziumsulfat von der Phosphorsäure abgetrennt wird. Das abgetrennte Kalziumsulfat wird in die Aufreinigungseinheit 5 geführt, wo das Kalziumsulfat mit Säure behandelt wird. Dabei werden die Verunreinigungen im Kalziumsulfat, die einem nachgeschalteten Klinkerprozess und die Zementqualität negativ beeinflussen, auf den vom Klinkerprozess geforderten Gehalt reduziert. Es handelt sich um ein integriertes Verfahren, bei dem in Abstimmung mit den Eduktqualitäten und den gewünschten Eigenschaften des erhaltenen Produkts hinsichtlich der Weiterverarbeitung die Prozessparameter, wie Verweilzeit, Säure, Temperatur und S/L-Verhältnis, angepasst werden können. In einer zweiten Trenneinheit (Kalziumsulfat-Trenneinheit) 6, die bevorzugt eine Filtrationseinheit ist, werden die Flüssigkeit und der resultierende Feststoff der in Schritt c) erhaltenen Suspension voneinander getrennt. Die Flüssigkeit 15, insbesondere als Filtrat, kann in dem existierenden Phosphorsäure-Schwefelsäure-Komplex verwendet werden. Das behandelte Kalziumsulfat kann in einem Klinkerprozess weiterverarbeitet werden.

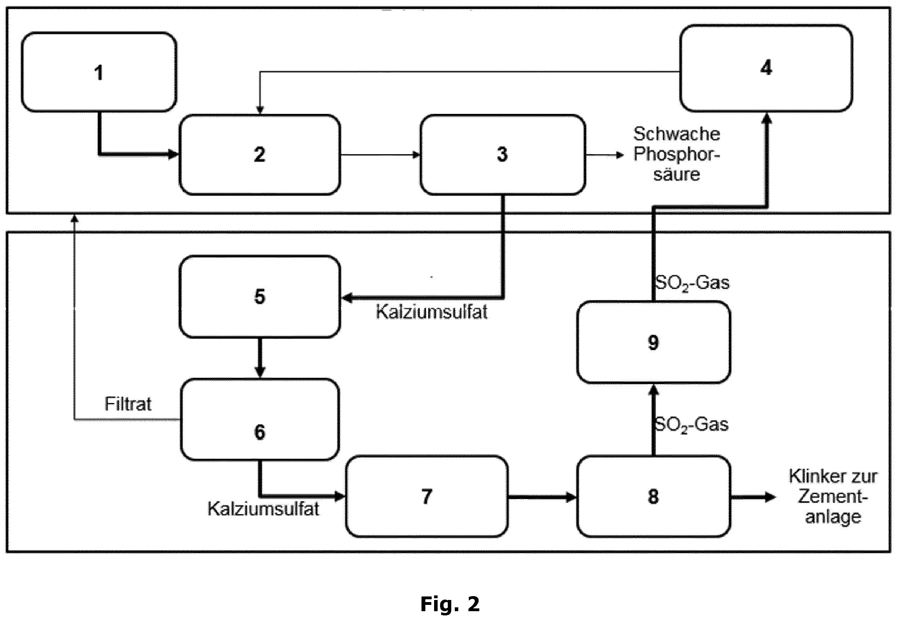

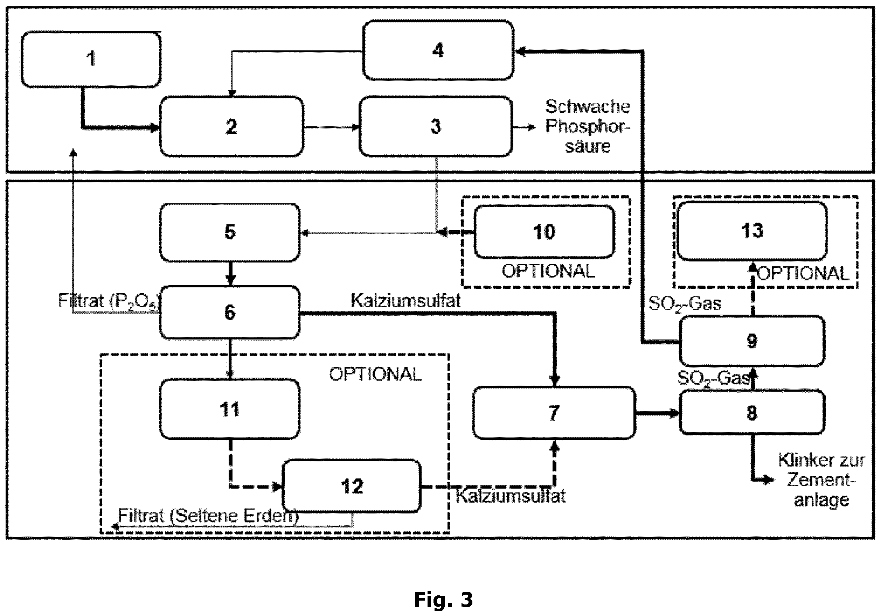

Fig. 2 zeigt ein Fließbild einer Phosphorsäureproduktion (existierender Komplex) und ein integriertes Verfahren zur Herstellung von Zementklinker und Schwefelsäure aus Kalziumsulfat, der von der Phosphorsäureproduktion stammt (integrierter Komplex). In einer Aufbereitungseinheit 1 wird das Phosphatgestein aufbereitet, um das Rohphosphat zu erhalten. Das Rohphosphat wird in der Rohphosphat-Reaktionseinheit der Phosphorsäureanlage 2 mit aus der Schwefelsäureproduktionsanlage stammender Schwefelsäure umgesetzt, um Phosphorsäure und festes Kalziumsulfat als Nebenprodukt zu bilden. Das in der Phosphorsäureproduktion generierte Kalziumsulfat wird in der ersten Trenneinheit 3, die bevorzugt eine Filtrationseinheit ist, der Phosphorsäureanlage von der Phosphorsäure abgetrennt und der Aufreinigungseinheit5 zugeführt. Dort wird das Kalziumsulfat mit Säure versetzt, so dass nach der Behandlung z.B. eine 1-12 molare Säure, insbesondere eine 1-12 molare Schwefelsäure, erhalten wird. Beispielsweise kann eine 1-12 molare Schwefelsäure zur Behandlung zugesetzt werden. Die Behandlung kann nach Zugabe der Säure z.B. bei einer Temperatur von 15-100°C für 5 bis 120 min durchgeführt werden, wobei die erhaltene Suspension vorzugsweise bewegt wird, z.B. durch Rühren. Dabei werden die Verunreinigungen im Kalziumsulfat, die den nachgeschalteten Zementklinkerprozess und die Zementqualität negativ beeinflussen, auf den vom Zementklinkerprozess geforderten Gehalt reduziert. In einer zweiten Trenneinheit 6, die bevorzugt eine Filtrationseinheit ist, werden die Flüssigkeit und der resultierende Feststoff voneinander getrennt. Die Flüssigkeit, insbesondere als Filtrat, kann in dem existierenden Phosphorsäure-Schwefelsäure-Komplex verwendet werden. Das behandelte Kalziumsulfat wird der für den Zementklinkerprozess vorgeschalteten Rohmehl-Mischeinheit 7 zugeführt. Dort wird das Kalziumsulfat mit den erforderlichen Zuschlagsstoffen für die geforderte Zementklinkerqualität im richtigen Verhältnis vermischt. Mit dem vorbereiteten Zementklinkerrohmehl wird die Zementklinker-Prozesseinheit 8 beschickt, wobei das Rohmehl vor der Zuführung zur Prozesseinheit 8 vorzugsweise in einem Wärmetauscher vorgewärmt wird (nicht gezeigt). In der Zementklinker-Prozesseinheit 8 wird Schwefeldioxid aus dem Kalziumsulfat getrennt und als Abgas aus der Zementklinker-Prozesseinheit der Schwefeldioxid-Abgasbehandlung 9 zugeführt. Das behandelte Schwefeldioxid-Gas kann optional der existierenden Schwefelsäureproduktionsanlage 4 zugeführt werden. Alternativ kann das behandelte Schwefeldioxid-Gas optional einer neuen Schwefelsäureproduktionsanlage (vgl. 13 in Fig. 3) zugeführt werden. Das in der Zementklinkerprozess-Einheit verbleibende Kalzium wird mit den Zuschlagsstoffen zu Zementklinker reagiert. Die Brenntemperatur zur Zementklinkerherstellung kann z.B. im Bereich von 1200°C bis 1600 °C und einer Brenndauer von 5 Minuten bis 60 Minuten erfolgen. Der so produzierte Zementklinker kann weiter zu Zement verarbeitet werden.

Fig. 3 zeigt ein schematisches Fließbild zur Verwertung von Kalziumsulfat aus der Phosphorsäureproduktion mithilfe eines integrierten Komplexes zur Herstellung von Zementklinker und Schwefelsäure gemäß Fig. 2, wobei zusätzlich alternative oder zusätzliche Prozessschritte gezeigt sind. Im Folgenden wird auf die alternativen oder zusätzlichen Prozessschritte eingegangen, ansonsten wird auf die Erläuterungen zu Fig. 2 verwiesen. Fig. 3 zeigt eine alternative Quelle für das in Schritt c) eingesetzte Kalziumsulfat. Anstelle des Kalziumsulfats aus der Filtrationseinheit der Phosphorsäureanlage 3 kann für das in Schritt c) eingesetzte Kalziumsulfat ein Kalziumsulfat von einer Halde 10 eingesetzt werden, bei dem es sich um deponiertes Kalziumsulfat aus einer Phosphorsäureproduktion handelt. Des Weiteren ist in Fig. 3 der optionale Aufbereitungsschritt zur Entfernung von Seltenen Erden gezeigt, der eine Reaktionseinheit zur Gewinnung Seltener Erdmetalle aus dem Kalziumsulfat 11 und die Kalziumsulfat-Trenneinheit 12 zur Abtrennung der flüssigen Phase von dem gereinigten Kalziumsulfat umfasst. Ferner ist in Fig. 3 gezeigt, dass das aus der SO₂-Behandlung 9 erhaltene Schwefeldioxid für die Gewinnung von Schwefelsäure in der existierenden Schwefelsäureproduktionsanlage 4 und/oder einer neuen Schwefelsäureproduktionsanlage 13 eingesetzt werden kann.

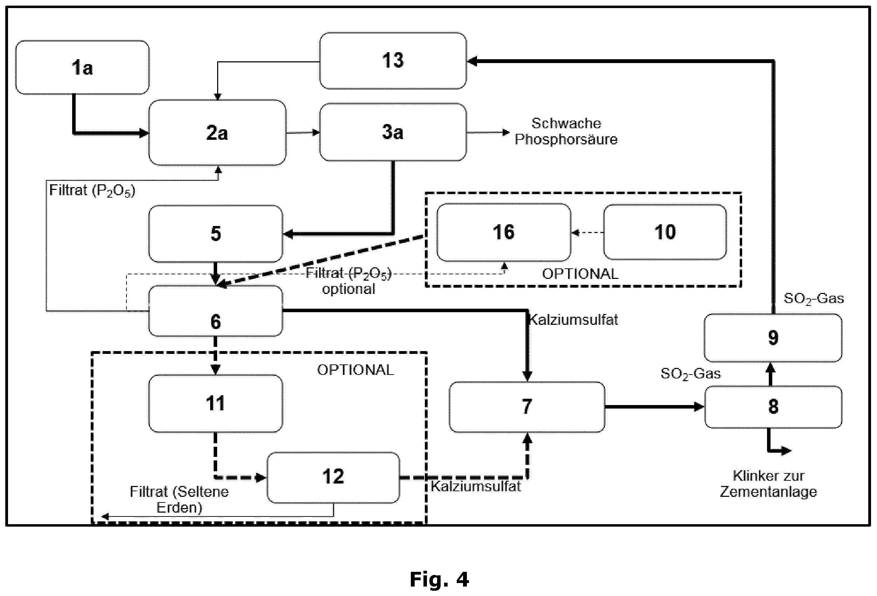

Fig. 4 zeigt ein schematisches Fließbild einer Gesamtanlage zur Phosphorsäureproduktion und ein Verfahren zur Herstellung von Zementklinker und Schwefelsäure aus Kalziumsulfat, das von der Phosphorsäureproduktion stammt. In dieser Variante des Fließbilds wird im Gegensatz zu den Konzepten aus Fig. 2 und Fig. 3 ein neuer Gesamtkomplex und nicht eine Integration in bestehende Komplexe beschrieben. In einer Aufbereitungseinheit Phosphatgestein 1a wird das Phosphatgestein aufbereitet, um das Rohphosphat zu erhalten. Das Rohphosphat wird in der Rohphosphat-Reaktionseinheit der Phosphorsäureanlage 2a mit aus der Schwefelsäureproduktionsanlage 13 stammender Schwefelsäure umgesetzt, um Phosphorsäure und festes Kalziumsulfat als Nebenprodukt zu bilden, wobei das Nebenprodukt Kalziumsulfat nach erfindungsgemäßen Verfahren beliebig als Dihydrat, Hemihydrat oder einer Kombination aus Hemihydrat und Dihydrat vorliegen kann. Das in der Phosphorsäureproduktion generierte Kalziumsulfat wird in der ersten Trenneinheit 3a, die bevorzugt eine Filtrationseinheit ist, der Phosphorsäureanlage von der Phosphorsäure abgetrennt und der Aufreinigungseinheit 5 zugeführt. Dort wird das Kalziumsulfat wie bereits in Fig. 2 beschrieben mit Säure behandelt und die resultierende Suspension in einer zweiten Trenneinheit 6 in Flüssigkeit und Feststoff voneinander getrennt. Die Flüssigkeit, insbesondere als Filtrat, kann in dem existierenden Phosphorsäure-Schwefelsäure-Komplex und/oder optional in einer zweiten Kalziumsulfat-Reaktionseinheit 16 zur Behandlung von Kalziumsulfat von der Halde 10 verwendet werden, wobei die Reaktionsbedingungen der zweiten Kalziumsulfat-Reaktionseinheit 16 in den Parameterbereichen der Aufreinigungseinheit 5 liegen. Die in der zweiten Kalziumsulfat-Reaktionseinheit 16 behandelte Suspension mit Kalziumsulfat von der Halde wird anschließend der zweiten Trenneinheit 6 zugeführt und wie in Fig. 2 beschrieben weiter verfahren. Wie in Fig. 3 beschrieben kann optional ein weiterer Reinigungsschritt zur Gewinnung von Seltenen Erdmetalle 11 und anschließende Trennung des Kalziumsulfats über eine Kalziumsulfat-Trenneinheit 12 erfolgen. Das behandelte Kalziumsulfat wird dann wie in Fig. 2 beschrieben in einer Rohmehl-Mischeinheit 7 weiterbehandelt, anschließend der Zementklinker-Prozesseinheit 8 zugeführt und das aus der SO₂-Behandlung 9 erhaltene Schwefeldioxid für die Gewinnung von Schwefelsäure in einer neuen Schwefelsäureproduktionsanlage 13 eingesetzt. Der Suspension in der optionalen Kalziumsulfat Reaktionseinheit 16 kann zur Trennung auch statt in die zweite Trenneinheit 6 in eine separate Kalziumsulfat Trenneinheit (nicht gezeigt) überführt werden, das abgetrennte Kalziumsulfat dann in die Rohmehl-Mischeinheit 7 und/oder der optionalen Einheit zur Gewinnung von Seltenen Erden aus Kalziumsulfat 11 zugeführt werden.

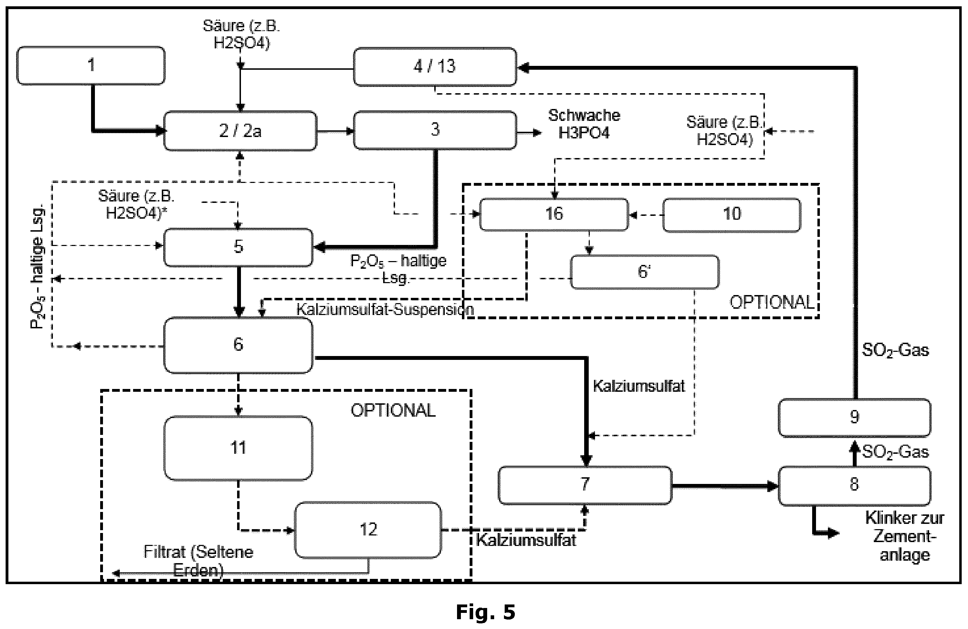

Fig. 5 zeigt eine erweiterte Darstellung der Figuren 2 bis 4. Hierbei gelten die bisher getroffenen Erläuterungen der Figuren 2 bis 4 entsprechend. Ergänzend sind die Zuleitungen der Säure, bevorzugt Schwefelsäure, dargestellt, wobei entsprechend des Erfindungsgedankens ein Kreislauf durch die Zufuhr von Schwefelsäure aus einer Schwefelsäureproduktionsanlage 4 und/oder 13 zu einer Reaktionseinheit in einer Phosphorsäureanlage 2 und/oder 2a geschlossen wird. Die Schwefelsäureanlagen 4 und 13 können koexistieren. Ebenfalls können die Phosphorsäureanlagen 2 und 2a koexistieren. Zusätzlich kann eine Säure, bevorzugt eine Schwefelsäure, von einer externen Quelle in den Prozess eingebracht werden. Die in der Schwefelsäureanlage 4 und/oder 13 produzierte Schwefelsäure kann in die zweite Kalziumsulfat-Reaktionseinheit 16 eingebracht werden. Alternativ kann auch hier eine Säure, bevorzugt eine Schwefelsäure, von einer externen Quelle genutzt werden, um die zweite Kalziumsulfat-Reaktionseinheit 16 mit einer Säure zu versorgen. Ebenfalls kann die **Schwefelsäure** aus 4 und/oder 13 in die Aufreinigungseinheit bzw. Kalziumsulfat-Reaktionseinheit 5 eingebracht werden. Diese fluidische Verbindung ist der Übersichtlichkeit halber nicht durch einen direkten Pfeil in Fig. 5 dargestellt, sondern soll durch das Asterisk (*) verdeutlicht werden. Für die Behandlung des Kalziumsulfates/Phosphorgipses von einer Halde, bevorzugt einer Halde einer Phosphorsäureanlage kann die erhaltene Suspension, welche durch die Vereinigung der Säure aus beispielsweise 4 und/oder 13 mit dem Kalziumsulfat/Phosphorgips der Halde 10 innerhalb der zweiten Kalziumsulfat-Reaktionseinheit 16 hervorgeht, in einer zusätzlichen zweiten Trenneinheit bzw. Kalziumsulfat-Trenneinheit 6' überführt werden. Hier erfolgt eine Trennung der Suspension in Kalziumsulfat und einer P₂O₅-haltigen Säure-Lösung. Das Kalziumsulfat aus 6' kann somit optional der Rohmehlzubereitung 7 zugeführt werden. Die Suspension der zweiten Kalziumsulfat-Reaktionseinheit 16 kann optional auch in die zweite Trenneinheit bzw. Kalziumsulfat-Trenneinheit 6 überführt werden. Die P₂O₅-haltige Säure-Lösung, wie sie in der zweiten Trenneinheit bzw. Kalziumsulfat-Trenneinheit 6 und/oder der zusätzlichen zweiten Trenneinheit bzw. Kalziumsulfat-Trenneinheit 6' anfällt, kann in die Aufreinigungseinheit bzw. Kalziumsulfat-Reaktionseinheit 5 und/oder der Reaktionseinheit der Phosphorsäureanlage 2 und/oder 2a und/oder optional in die zweite Kalziumsulfat-Reaktionseinheit 16 rückgeführt werden. Die gestrichelten Linien/Pfeile stelle folglich optional vorliegenden Stoffströme da, welche einzeln oder aber gleichzeitig vorliegen können.

### Beispiele

Nachfolgend sind einige Beispiele zur Reinigung verschiedener Phosphorgipse dargestellt. Die Phosphorgipse wurden jeweils vor und nach der Behandlung nach beschriebenen Verfahren für mindestens 24 h bei 50 °C getrocknet um freies Wasser zu entfernen. Die chemische Zusammensetzung der Gipse wurde vor und nach Behandlung mittels Röntgenfluoreszenzanalyse (RFA) auf einem Axios Advanced Spektrometer der Firma PANalytical mit dem Software Packet SuperQ 5.3B bestimmt. Zu diesem Zweck wurde der Gips mittels Lithiumtetraborat aufgeschlossen. Der Glühverlust der Gipse wurde bei 1050 °C ermittelt. Der Fluorid-Gehalt wurde nach Aufschluss des Gipses mittels Natriumperoxid und Salzsäure mittels ionenselektiver Elektrode bestimmt. Alle nachfolgend angegebenen Werte der Ergebnisse aus der RFA beziehen sich auf die glühverlustfreien Gipsproben. Einige Gipse wurden zusätzlich noch vor und nach Behandlung mittels Pulverdiffraktometrie auf einem D4 Endeavor Diffraktometer der Firma Bruker hinsichtlich ihrer mineralogischen Zusammensetzung überprüft. Zur Auswertung mittels Rietveld Methode wurde das Software Packet Topas 4.2 der Firma Bruker verwendet. Der Dᵥ(50)-Wert der Korngrößenverteilung wurde auf einem Mastersizer 3000 der Firma Malvern mit Ethanol als Dispergiermedium ermittelt. Als Streuungsmodell wurde das Fraunhofer-Modell angewandt.

### Beispiel 1:

50 g eines Phosphorgips bezeichnet als "PG A" mit P₂O₅-Gehalten von 1,29 Gew.-% und F-Gehalten von 1,25 Gew.-% wurde mit 200 ml (S/L = 0,25) 8 molarer Schwefelsäure für 30 Minuten bei 60 °C mittels eines KPG-Rührers gerührt. Nach Ablauf der Zeit wurde die Suspension zügig filtriert und zweimal mit 57,5 ml Wasser bei Raumtemperatur gewaschen. Nach Behandlung betragen die P₂O₅- bzw. F-Gehalte noch 0,02 bzw. 0,01 Gew.-% **(entspricht einer Auslaugungseffizienz von 98** % **bzw. 99 %).** Die mineralogische Zusammensetzung vor Behandlung wurde mit 2,8 Gew.-% Quartz, 91,5 Gew.-% Dihydrat (CaSO₄ * 2H₂O), 3,7 Gew.-% Hemihydrat (CaSO₄ * 0,5 H₂O) und 2,9 Gew.-% Anhydrit (CaSO₄) ermittelt. Nach Behandlung wurde folgende Zusammensetzung ermittelt: 3,3 Gew.-% Quartz, 1,2 Gew.-% Dihydrat (CaSO₄ * 2H₂O), 0,1 Gew.-% Hemihydrat (CaSO₄ * 0,5 H₂O) und 95,5 Gew.-% Anhydrit (CaSO₄).

### Beispiel 2:

75 g des gleichen Gipses PG A wie in Beispiel 1 wurde in einem weiteren Versuch mit 150 ml (S/L = 0,5) 6 molarer Schwefelsäure für 30 Minuten bei 60 °C mittels eines KPG-Rührers gerührt. Nach Ablauf der Zeit wurde die Suspension zügig filtriert und zweimal mit 86,3 ml Wasser bei Raumtemperatur gewaschen. Nach Behandlung betragen die P₂O₅- bzw. F-Gehalte noch 0,29 bzw. 0,03 Gew.-% **(entspricht einer Auslaugungseffizienz von 78** % **bzw. 98 %).** Nach Behandlung wurde folgende mineralogische Zusammensetzung ermittelt: 3,2 Gew.-% Quartz, 73,2 Gew.-% Dihydrat (CaSO₄ * 2H₂O), 2,4 Gew.-% Hemihydrat (CaSO₄ * 0,5 H₂O) und 21,2 Gew.-% Anhydrit (CaSO₄). Der Dᵥ(50)-Wert nach Behandlung beträgt 59,1 µm.

### Beispiel 3:

75 g eines weiteren Gipses (als PG B bezeichnet) mit P₂O₅-Gehalten von 1,70 Gew.-% und F-Gehalten von 2,13 Gew.-% wurde in einem weiteren Versuch mit 150 ml (S/L = 0,5) 6 molarer Schwefelsäure für 30 Minuten bei 75 °C mittels eines KPG-Rührers gerührt. Nach Ablauf der Zeit wurde die Suspension zügig filtriert und zweimal mit 86,3 ml Wasser bei Raumtemperatur gewaschen. Nach Behandlung betragen die P₂O₅- bzw. F-Gehalte noch 0,07 bzw. 0,12 Gew.-% **(entspricht einer Auslaugungseffizienz von 96** % **bzw. 94 %).** Die mineralogische Zusammensetzung vor Behandlung wurde mit 3 Gew.-% Quartz und 97 Gew.-% Dihydrat (CaSO₄ * 2H₂O) ermittelt. Nach Behandlung wurde folgende Zusammensetzung ermittelt: 2,5 Gew.-% Quartz, 0,4 Gew.-% Dihydrat (CaSO₄ * 2H₂O) und 97,2 Gew.-% Anhydrit (CaSO₄). Der Dᵥ(50)-Wert nach Behandlung beträgt 9,77 µm.

### Beispiel 4:

75 g des gleichen Gipses (PG B) wurde in einem weiteren Versuch mit 150 ml (S/L = 0,5) 6 molarer Schwefelsäure für 45 Minuten bei 75 °C mittels eines KPG-Rührers gerührt. Nach Ablauf der Zeit wurde die Suspension zügig filtriert und zweimal mit 86,3 ml 75 °C heißem Wasser gewaschen. Nach Behandlung betragen die P₂O₅- bzw. F-Gehalte noch 0,03 bzw. 0,11 Gew.-% **(entspricht einer Auslaugungseffizienz von 98** % **bzw. 95 %).** Nach Behandlung wurde folgende mineralogische Zusammensetzung ermittelt: 2,9 Gew.-% Quartz, 0,2 Gew.-% Dihydrat (CaSO₄ * 2H₂O) und 97,0 Gew.-% Anhydrit (CaSO₄). Der Dᵥ(50)-Wert nach Behandlung beträgt 9,34 µm.

### Beispiel 5

75 g des gleichen Gipses (PG B) wurde in einem weiteren Versuch mit 150 ml (S/L = 0,5) 7 molarer Schwefelsäure für 30 Minuten bei 75 °C mittels eines KPG-Rührers gerührt. Nach Ablauf der Zeit wurde die Suspension zügig filtriert und zweimal mit 86,3 ml Wasser bei Raumtemperatur gewaschen. Nach Behandlung betragen die P₂O₅- bzw. F-Gehalte noch 0,03 bzw. 0,06 Gew.-% **(entspricht einer Auslaugungseffizienz von 98** % **bzw. 97 %).** Der Dᵥ(50)-Wert nach Behandlung beträgt 6,99 µm.

### Beispiel 6:

75 g des gleichen Gipses (PG B) wurde in einem weiteren Versuch mit 150 ml (S/L = 0,5) 4 molarer Schwefelsäure für 20 Minuten bei 30 °C mittels eines KPG-Rührers gerührt. Nach Ablauf der Zeit wurde die Suspension zügig filtriert und zweimal mit 86,3 ml Wasser bei Raumtemperatur gewaschen. Nach Behandlung betragen die P₂O₅- bzw. F-Gehalte noch 0,43 bzw. 0,17 Gew.-% **(entspricht einer Auslaugungseffizienz von 75** % **bzw. 92 %).** Nach Behandlung wurde folgende mineralogische Zusammensetzung ermittelt: 1,7 Gew.-% Quartz, 96,3 Gew.-% Dihydrat (CaSO₄ * 2H₂O), 2,0 Gew.-% Hemihydrat (CaSO₄ * 0,5 H₂O) und 0 Gew.-% Anhydrit (CaSO₄). Der Dᵥ(50)-Wert nach Behandlung beträgt 16,1 µm.

### Beispiel 7:

Zur Beurteilung, ob das beschriebene Verfahren auch mit lediglich getrenntem und damit ungewaschenem Phosphorgips aus der Phosphorsäureanlage eingesetzt werden kann, wurden 75 g des gleichen Gipses PG B wie in Beispiel 3 mit 25 g 25 %iger P₂O₅-Lösung (in Form von Phosphorsäure) versetzt und mit 150 ml (S/L = 0,5; 25 g P₂O₅-Lösung nicht berücksichtigt) 7 molarer Schwefelsäure für 30 Minuten bei 75 °C mittels eines KPG-Rührers gerührt. Nach Ablauf der Zeit wurde die Suspension zügig filtriert und zweimal mit 86,3 ml Wasser bei Raumtemperatur gewaschen. Nach Behandlung betragen die P₂O₅- bzw. F-Gehalte noch 0,07 bzw. 0,08 Gew.-% **(entspricht einer Auslaugungseffizienz von 96** % **bzw. 96 %).** Nach Behandlung wurde folgende mineralogische Zusammensetzung ermittelt: 2,5 Gew.-% Quartz, 0,2 Gew.-% Dihydrat (CaSO₄ * 2H₂O) und 97,3 Gew.-% Anhydrit (CaSO₄). Der Dᵥ(50)-Wert nach Behandlung beträgt 6,62 µm.

### Beispiel 8:

Zur Bewertung der Filtrierbarkeit der Suspensionen in Abhängigkeit der Einflussgrößen wie bspw. Temperatur, Verweilzeit und Konzentration der Säure wurden die Filtrationszeiten der Suspensionen aus den Beispielen 3, 4 und 5 über eine Filternutsche mit einer Filterfläche von 56 cm² bei einem Vakuum von 500 mbar bestimmt. In allen Fällen lag die Filterkuchenhöhe zwischen 13 und 14,5 mm. Bei der Suspension aus Beispiel 5 ergaben sich eine Filtrationszeit von 30 s und 52 s sowie 39 s in 1. bzw. 2. Waschung. Bei der Suspension aus Beispiel 3 ergaben sich eine Filtrationszeit von 11 s und 22 s sowie 19 s in 1. bzw. 2. Waschung. Bei der Suspension aus Beispiel 4 ergaben sich eine Filtrationszeit von 11 s und 20 s sowie 11 s in 1. bzw. 2. Waschung. Es zeigt sich, dass durch Anpassung der Einflussgrößen die Filtrierbarkeit unter Beibehaltung der Reinigungsgüte optimiert werden kann.

### Beispiel 9:

Zur Überprüfung der Machbarkeit einer Prozessanalytik mittels Bestimmung der Säurekonzentration zu integrieren wurden 150 g des Gipses PG B in einem weiteren Versuch mit 300 ml (S/L = 0,5) 5 molarer Schwefelsäure bei 75 °C mittels eines KPG-Rührers gerührt. Nach definierten Zeitintervallen von jeweils 10 Minuten und direkt nach Beginn (t = 1 Minute) wurden jeweils eine Probe (ca. 12 ml Suspension) gezogen filtriert und zwei Mal mit je ca. 6 ml Wasser gewaschen. Das Filtrat des ersten Filtrationsschritts wurde aufgefangen und für weitere Analysen verwendet. Die Reaktion wurde nach 100 Minuten abgebrochen, so dass insgesamt 11 Proben gezogen wurden. Zur Bestimmung der Säurekonzentration der einzelnen Filtratproben wurden jeweils 0,5 ml des Filtrats mit ca. 20 - 40 ml Reinstwasser verdünnt und mittels einer 1 M Natronlauge titriert. Zusätzlich wurde noch die Säurekonzentration der eingesetzten Säure überprüft. Der Äquivalenzpunkt wurde mittels eines handelsüblichen automatischen Titrator der Firma Metrohm potentiometrisch bestimmt. Die filtrierten und gewaschenen Phosphorgips-Proben wurden für mind. 24 h bei 50 °C getrocknet und anschließend hinsichtlich Mineralogie und P₂O₅-Gehalt untersucht.

**Tabelle 1. Resultierende Säurekonzentration nach entsprechender Verweilzeit des Gipses PG B in Schwefelsäure; mit den Reaktionsbedingungen: c = 5 mol/l; T = 75 °C; S/L = 0,5. Die Konzentration der eingesetzten Säure wurde ebenfalls überprüft.**

| **Probe** | **Zeit Probenahme min.** | **Säure-Konzentration Probe mol/l** | **Relative Abnahme Säure-Konzentration Probe %** |
|---|---|---|---|
| | | **Mittelwert** | |
| 5 M H₂SO₄ (eingesetzt) | | 4,97 | -- ⁱ⁾ |
| V0 | 1 | 5,01 | 0% ⁱⁱ⁾ |
| V1 | 10.33 | 4,92 | 1,9% |
| V2 | 20 | 4,82 | 3,9% |
| V3 | 30 | 4,77 | 5,0% |
| V4 | 40 | 4,67 | 6,9% |
| V5 | 50 | 4,57 | 8,9% |
| V6 | 60 | 4,60 | 8,4% |
| V7 | 70 | 4,61 | 8,0% |
| V8 | 80 | 4,64 | 7,6% |
| V9 | 90 | 4,67 | 7,0% |
| V10 | 100 | 4,68 | 6,7% |

| | | | |
|---|---|---|---|
| i) eingesetzte Säure; Kontrollmessung ii) Säurekonzentration gemessen nach einer Minute; definiert als Startkonzentration nach direkter Zugabe der Säure | | | |

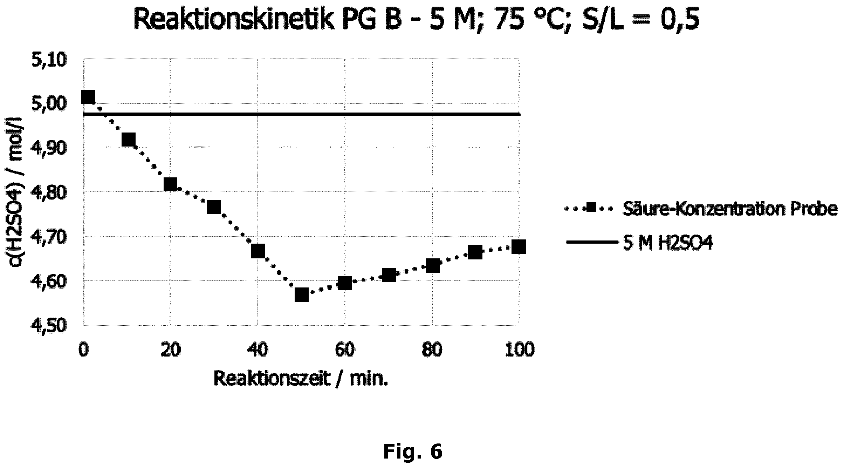

Figur 6 ist eine grafische Darstellung der Säurekonzentration über die Verweilzeit des Gipses des Gipses PG B in Schwefelsäure.

**Tabelle 2. Mineralogie und Auslaugungseffizienz hinsichtlich P₂O₅-Gehalt nach entsprechender Verweilzeit des Gipses PG B in Schwefelsäure; mit den Reaktionsbedingungen: c = 5 mol/l; T = 75 °C; S/L = 0,5.**

| **Probe** | **Probenahme min.** | **Anhydrit Gew.-%** | **Dihydrat Gew.-%** | **Hemihydrat Gew.-%** | **P₂O₅ (GV-frei) Gew.-%** | **P₂O₅**-**Auslaugung %** |
|---|---|---|---|---|---|---|
| | | | | | 1,70 | |
| V0 | 1 | 18,7 | 74,9 | 4,4 | 0,46 | 72,8 |
| V1 | 10,33 | 34,0 | 59,4 | 3,4 | 0,42 | 75,2 |
| V2 | 20 | 35,4 | 58,6 | 3,4 | 0,33 | 80,6 |
| V3 | 30 | 40,1 | 54,6 | 2,6 | 0,27 | 84,4 |
| V4 | 40 | 79,4 | 17,3 | 0,7 | 0,18 | 89,7 |
| V5 | 50 | 96,9 | 0,2 | 0,0 | 0,11 | 93,7 |
| V6 | 60 | 97,2 | 0,0 | 0,0 | 0,06 | 96,2 |
| V7 | 70 | 97,3 | 0,0 | 0,0 | 0,05 | 96,8 |
| V8 | 80 | 95,1 | 0,7 | 0,0 | 0,04 | 97,5 |
| V9 | 90 | 96,4 | 0,3 | 0,0 | 0,05 | 96,8 |
| V10 | 100 | 97,3 | 0,0 | 0,0 | 0,03 | 98,1 |

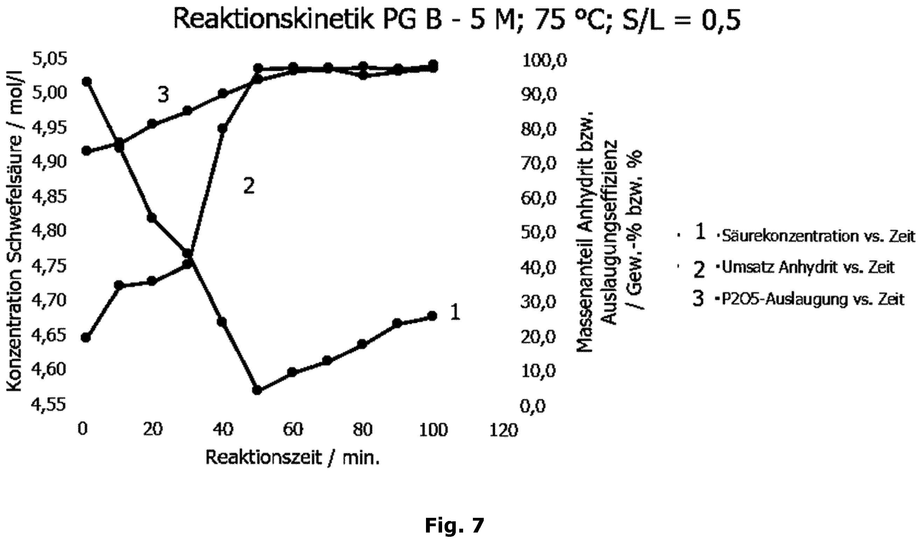

Figur 7 ist eine grafische Darstellung der Säurekonzentration (linke Achse), des Anhydrit-Gehalts (rechte Achse) und der Auslaugungseffizienz hinsichtlich P₂O₅-Gehalt (rechte Achse) über die Verweilzeit des Gipses PG B in Schwefelsäure.

### Beispiel 10:

Zum selben Zweck wie bei Beispiel 9 wurde 150 g des Gipses PG A in einem weiteren Versuch mit 300 ml (S/L = 0,5) 6 molarer Schwefelsäure bei 75 °C mittels eines KPG-Rührers gerührt. Nach definierten Zeitintervallen von jeweils ca. 6 Minuten und direkt nach Beginn (t = 0,5 Minuten) wurden jeweils eine Probe (ca. 12 ml Suspension) gezogen filtriert und zwei Mal mit je ca. 6 ml Wasser gewaschen. Das Filtrat des ersten Filtrationsschritts wurde aufgefangen und für weitere Analysen verwendet. Die Reaktion wurde nach 55 Minuten abgebrochen, so dass insgesamt 9 Proben gezogen wurden. Zur Bestimmung der Säurekonzentration der einzelnen Filtratproben wurden jeweils 0,5 ml des Filtrats mit ca. 20 - 40 ml Reinstwasser verdünnt und mittels einer 1 M Natronlauge titriert. Zusätzlich wurde noch die Säurekonzentration der eingesetzten Säure überprüft. Der Äquivalenzpunkt wurde mittels eines handelsüblichen automatischen Titrator der Firma Metrohm potentiometrisch bestimmt. Die filtrierten und gewaschenen Phosphorgips-Proben wurden für mind. 24 h bei 50 °C getrocknet und anschließend hinsichtlich Mineralogie und P₂O₅-Gehalt untersucht.

**Tabelle 3. Resultierende Säurekonzentration nach entsprechender Verweilzeit des Gipses PG A in Schwefelsäure; mit den Reaktionsbedingungen: c = 6 mol/l; T = 75 °C; S/L = 0,5. Die Konzentration der eingesetzten Säure wurde ebenfalls überprüft.**

| **Probe** | **Probenahme min.** | **Säure-Konzentration Probe mol/l** | **Relative Abnahme Säure-Konzentration Probe** % |
|---|---|---|---|
| | | Mittelwert | |
| 6 M H₂SO₄ (eingesetzt) | | 6,076 | - - ⁱ⁾ |
| V0 | 0,5 | 6,102 | 0% ⁱⁱ⁾ |
| V1 | 6 | 5,946 | 2,6% |
| V2 | 12 | 5,662 | 7,2% |
| V3 | 17,5 | 5,599 | 8,2% |
| V4 | 23 | 5,622 | 7,9% |
| V5 | 28,5 | 5,630 | 7,7% |
| V6 | 34,5 | 5,665 | 7,2% |
| V7 | 45 | 5,656 | 7,3% |
| V8 | 55 | 5,699 | 6,6% |

| | | | |
|---|---|---|---|
| i) eingesetzte Säure; Kontrollmessung ii) Säurekonzentration gemessen nach einer halben Minute; definiert als Startkonzentration nach direkter Zugabe der Säure | | | |

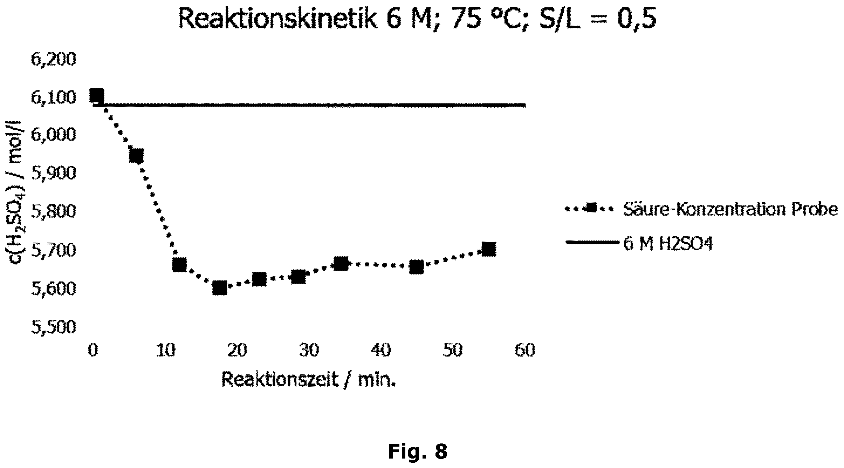

Figur 8 ist eine grafische Darstellung der Säurekonzentration über die Verweilzeit des Gipses PG A in Schwefelsäure.

**Tabelle 4. Mineralogie und Auslaugungseffizienz hinsichtlich P₂O₅-Gehalt nach entsprechender Verweilzeit des Gipses PG A in Schwefelsäure; mit den Reaktionsbedingungen: c = 6 mol/l; T = 75 °C; S/L = 0,5.**

| **Probe** | **Probenahme min.** | **Anhydrit Gew.-%** | **Dihydrat Gew.-%** | **Hemihydrat Gew.-%** | **P₂O₅ (GV-frei) Gew.-%** | **P₂O₅**-**Auslaugung %** |
|---|---|---|---|---|---|---|
| | | | | | 0.99 | |
| V0 | 0,5 | 17,9 | 79,9 | 0,0 | 0,55 | 44,9 |
| V1 | 6,0 | 89,4 | 7,9 | 0,0 | 0,32 | 67,8 |
| V2 | 12,0 | 95,1 | 2,1 | 0,0 | 0,11 | 88,9 |
| V3 | 17,5 | 97,6 | 0,0 | 0,0 | 0,05 | 94,5 |
| V4 | 23,0 | 97,7 | 0,0 | 0,0 | 0,06 | 94,4 |
| V5 | 28,5 | 97,5 | 0,0 | 0,0 | 0,04 | 95,6 |
| V6 | 34,5 | 97,6 | 0,0 | 0,0 | 0,04 | 95,6 |
| V7 | 45,0 | 97,4 | 0,0 | 0,0 | 0,04 | 95,6 |
| V8 | 55,0 | 97,7 | 0,0 | 0,0 | 0,04 | 95,6 |

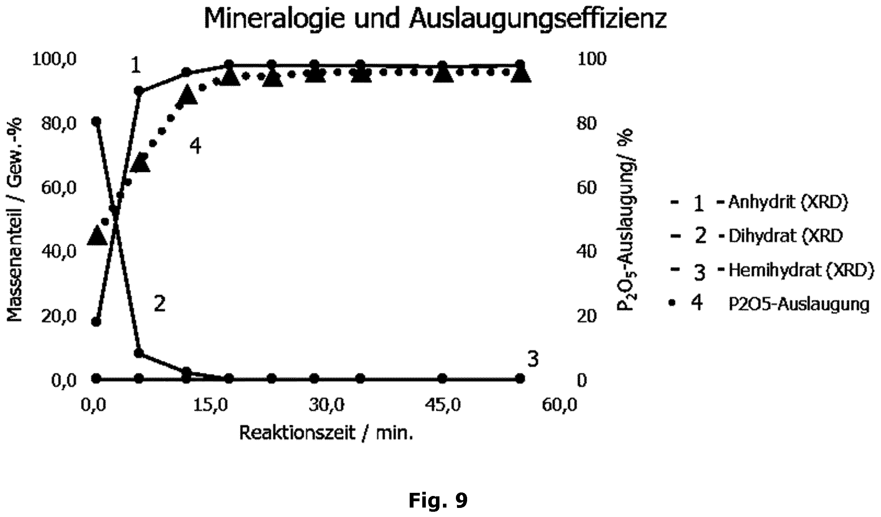

Figur 9 ist eine grafische Darstellung der Zusammensetzung der Mineralogie (linke Achse) und der Auslaugungseffizienz hinsichtlich P₂O₅-Gehalt (rechte Achse) über die Verweilzeit des Gipses PG A in Schwefelsäure.

### Beispiel 11:

Ein weiteres Beispiel, welches die Optimierung der Filtrierbarkeit mittels Überwachung des Reaktionsverlaufs zeigt, ist im Folgenden gegeben. Zu diesem Zweck wurden 150 g des Gipses PG A mit 150 ml (S/L = 0,5) 5 molarer Schwefelsäure für einmal 100 Minuten bei 75 °C und die gleiche Menge des Gipses noch einmal bei gleicher Säurekonzentration, gleichem S/L-Verhältnis und gleicher Temperatur aber lediglich für 40 Minuten (im Vorversuch ermitteltes Optimum nach minimaler Säurekonzentration; ähnlich Beispiel 9) mittels eines KPG-Rührers gerührt. Nach Ablauf der Zeit wurden die Suspensionen zügig filtriert und jeweils zweimal mit 172,5 ml Wasser bei Raumtemperatur gewaschen. Nach Behandlung betragen die P₂O₅- bzw. F-Gehalte für 100 Minuten Reaktionszeit noch 0,02 bzw. 0,03 Gew.-% **(entspricht einer Auslaugungseffizienz von 98** % **bzw. 98** %) und für 40 Minuten noch 0,06 bzw. < 0,01 Gew.-% **(entspricht einer Auslaugungseffizienz von 95 % bzw. nahezu 100 %).** Nach Behandlung wurde folgende mineralogische Zusammensetzung ermittelt: (für 100 Minuten Reaktionszeit) 5,7 Gew.-% Quartz, 0,1 Gew.-% Dihydrat (CaSO₄ * 2H₂O), 0,0 Gew.-% Hemihydrat (CaSO₄ * 0,5 H₂O) und 94,2 Gew.-% Anhydrit (CaSO₄). (für 40 Minuten Reaktionszeit) 2,3 Gew.-% Quartz, 18,3 Gew.-% Dihydrat (CaSO₄ * 2H₂O), 0,2 Gew.-% Hemihydrat (CaSO₄ * 0,5 H₂O) und 79,3 Gew.-% Anhydrit (CaSO₄). Der Dᵥ(50)-Wert nach 100 Minuten Reaktionszeit beträgt 12,8 µm und nach 40 Minuten Reaktionszeit 18,0 µm. Hinsichtlich der Filtrationszeit ergibt sich eine signifikante Verbesserung, wenn die Reaktion bereits nach 40 Minuten abgebrochen und die Suspension filtriert wird. Mit einer Filternutsche und unter Vakuum wie in Beispiel 8 beschrieben wurden beide Suspensionen filtriert und die Filterkuchen zwei Mal gewaschen. Ein deutlicher Unterschied konnte bereits in den Filterkuchenhöhen ermittelt werden. Nach 100 Minuten Reaktionszeit betrug diese 24 mm und nach 40 Minuten Reaktionszeit 29 mm. Bei der Suspension nach 100 Minuten ergaben sich eine Filtrationszeit von 27 s und 55 s sowie 55 s in 1. bzw. 2. Waschung. Bei der Suspension nach 40 Minuten ergaben sich eine Filtrationszeit von 21 s und 35 s sowie 38 s in 1. bzw. 2. Waschung. Summiert man die Filtrationszeiten und Waschungen auf, so ergibt sich eine Verbesserung der Filtrierbarkeit um ca. 31 % nur durch Optimierung des Reaktionsendes (40 Minuten statt 100 Minuten Reaktionszeit) bei nahezu gleichbleibender Auslaugungseffizienz.

### Bezugszeichenliste

- 1: Aufbereitungseinheit Phosphatgestein bzw. Phosphaterz
- 1a: Aufbereitungseinheit Phosphatgestein bzw. Phosphaterz (neu)
- 2: Reaktionseinheit der Phosphorsäureanlage
- 2a: Reaktionseinheit der Phosphorsäureanlage (neu)
- 3: erste Trenneinheit der Phosphorsäureanlage, bevorzugt Filtrationseinheit
- 3a: erste Trenneinheit der Phosphorsäureanlage (neu), bevorzugt Filtrationseinheit
- 4: Schwefelsäureproduktionsanlage (existierend)
- 5: Aufreinigungseinheit bzw. Kalziumsulfat-Reaktionseinheit
- 6: zweite Trenneinheit bzw. Kalziumsulfat-Trenneinheit
- 7: Rohmehl-Mischeinheit
- 8: Zementklinker-Prozesseinheit
- 9: Schwefeldioxid-Abgasbehandlung
- 10: Kalziumsulfat von Halde (bevorzugt aus Phosphorsäureproduktion)
- 11: Gewinnung Seltene Erden aus Kalziumsulfat
- 12: Kalziumsulfat-Trenneinheit
- 13: Schwefelsäureproduktionsanlage (neu)
- 14: Kalziumsulfatschlamm aus der Reaktionseinheit der Phosphorsäureanlage
- 15: abgetrennte Flüssigkeit zum existierenden Schwefelsäure/Phosphorsäure Komplex
- 16: zweite Kalziumsulfat-Reaktionseinheit

## Patentansprüche

1. Verfahren zur Herstellung von Phosphorsäure und gereinigtem Kalziumsulfat durch Umsetzung von Rohphosphat mit Schwefelsäure, wobei das Verfahren folgende Schritte umfasst:
a) das Rohphosphat wird in einem ersten Schritt mit konzentrierter Schwefelsäure aufgeschlossen und zu Kalziumsulfat in Form von Dihydrat, Hemihydrat oder einer Kombination aus Hemihydrat und Dihydrat und Phosphorsäure umgewandelt,
b) das Kalziumsulfat wird als Feststoff von der flüssigen Phase der erhaltenen Suspension abgetrennt,
c) das von der Phosphorsäure abgetrennte Kalziumsulfat aus Schritt b) und/oder Kalziumsulfat/Phosphorgips von der Halde wird mit einer Säure behandelt, um eine Suspension mit gereinigtem Kalziumsulfat und P₂O₅-haltige Säure-Lösung zu erhalten,
d) das gereinigte Kalziumsulfat nach Schritt c) wird als Feststoff von der flüssigen Phase der erhaltenen Suspension abgetrennt,
e) e1) die P₂O₅-haltige erhaltene flüssige Phase aus Schritt d) wird als Einsatzstoff in Schritt a), insbesondere als Teilmenge der erforderlichen Schwefelsäure zum Aufschluss des Rohphosphats verwendet und/oder e2) die P₂O₅-haltige erhaltene flüssige Phase aus Schritt d) wird als Einsatzstoff zur Behandlung von Phosphorgips von der Halde gemäß Schritt c) verwendet, um eine Suspension von gereinigtem Kalziumsulfat und P₂O₅-haltiger Säure-Lösung zu erhalten,
**dadurch gekennzeichnet, dass**
die Abtrennung des Kalziumsulfates aus der Suspension in Schritt d) um einen Zeitpunkt in einem Bereich von t_{MIN} + 30 Minuten bis t_{MIN} - 30 Minuten gestartet wird, wobei t_{MIN} definiert ist als der Zeitpunkt, bei welchem die Säurekonzentration während der Behandlung in Schritt c) ein Minimum durchläuft.

2. Verfahren zur Herstellung von Schwefelsäure und Zementklinker, wobei das Verfahren folgende Schritte umfasst:
a) Rohphosphat wird in einem ersten Schritt mit konzentrierter Schwefelsäure aufgeschlossen und zu Kalziumsulfat in Form von Dihydrat, Hemihydrat oder einer Kombination aus Hemihydrat und Dihydrat und Phosphorsäure umgewandelt,
b) das Kalziumsulfat wird als Feststoff von der flüssigen Phase der erhaltenen Suspension abgetrennt,
c) das von der Phosphorsäure abgetrennte Kalziumsulfat aus Schritt b) und/oder Kalziumsulfat/Phosphorgips von der Halde wird mit einer Säure behandelt, um eine Suspension mit gereinigtem Kalziumsulfat und P₂O₅-haltige Säure-Lösung zu erhalten,
d) das gereinigte Kalziumsulfat nach Schritt c) wird als Feststoff von der flüssigen Phase der erhaltenen Suspension abgetrennt,
e) das in Schritt d) erhaltene abgetrennte gereinigte Kalziumsulfat wird mit Zusatzstoffen und Reduktionsmittel vermischt, um eine Rohmehlmischung für die Zementklinkerproduktion zu erhalten,
f) die Rohmehlmischung wird gebrannt, um den Zementklinker zu erhalten, wobei Schwefeldioxid als Abgas gebildet wird, und
g) das gebildete Schwefeldioxid wird als Rohstoff einer Schwefelsäureproduktion zugeführt, um die Schwefelsäure herzustellen, wobei die hergestellte Schwefelsäure als Einsatzmaterial in der Phosphorsäureproduktion verwendet und/oder einer anderen Nutzung zugeführt werden kann,
**dadurch gekennzeichnet, dass**
die Abtrennung des Kalziumsulfates aus der Suspension in Schritt d) um einen Zeitpunkt in einem Bereich von t_{MIN} + 30 Minuten bis t_{MIN} - 30 Minuten gestartet wird, wobei t_{MIN} definiert ist als der Zeitpunkt, bei welchem die Säurekonzentration während der Behandlung in Schritt c) ein Minimum durchläuft.

3. Verfahren nach Anspruch 1 oder 2, wobei die Abtrennung des Kalziumsulfates aus der Suspension in Schritt d) um einen Zeitpunkt in einem Bereich von t₁ + 20 Minuten bis t₁ - 20 Minuten, bevorzugt in einem Bereich von t₁ bis t₁ + 20 Minuten, gestartet wird, wobei t₁ definiert ist als der Zeitpunkt, bei welchem die Säurekonzentration während der Behandlung in Schritt c) zumindest um 1,0%, bevorzugt zumindest um 4,0%, ihrer Anfangssäurekonzentration vermindert wurde.

4. Verfahren nach einem der vorhergehenden Ansprüche, **dadurch**
**gekennzeichnet, dass** die Abtrennung des Kalziumsulfates aus der Suspension in Schritt d) um einen Zeitpunkt in einem Bereich von t_{MIN} + 15 Minuten bis t_{MIN} - 15 Minuten gestartet wird.

5. Verfahren nach einem der vorhergehenden Ansprüche, **dadurch**
**gekennzeichnet, dass** die Behandlung des Kalziumsulfates/Phosphorgips von der Halde ohne das Kalziumsulfat aus Schritt b) in einem separaten Schritt mit einer Säure behandelt wird und
- die gebildete Suspension dem Schritt d) zugeführt wird oder
- die gebildete Suspension einer separaten Trenneinheit zugeführt wird und in dieser die Trennung des Feststoffes von der P₂O₅-haltigen Säure-Lösung umfassenden flüssigen Phase erfolgt.

6. Verfahren nach einem der vorhergehenden Ansprüche, **dadurch gekennzeichnet, dass** das Kalziumsulfat in Schritt b) durch Filtration von der Phosphorsäure abgetrennt wird.

7. Verfahren nach einem der vorhergehenden Ansprüche, **dadurch**
**gekennzeichnet,**
**dass** als Kalziumsulfat, das in Schritt c) eingesetzt wird,
das aus einer Trenneinheit des Schritts b) erhaltene Kalziumsulfat verwendet wird, wobei bevorzugt der nach der ersten Trennung von der Phosphorsäure erhaltene Kalziumsulfat-Feststoff, bevorzugt Kalziumsulfat-Filterkuchen, direkt oder nach einer oder mehreren Wäschen mit Flüssigkeit, bevorzugt Wasser, verwendet wird, und/oder
**dass** auf Halden gelagertes Kalziumsulfat/Phosphorgips dem Schritt c) zugeführt wird.

8. Verfahren nach einem der vorhergehenden Ansprüche, **dadurch gekennzeichnet, dass**
in Schritt c) die Säure in einer solchen Menge zugegeben wird, dass das Gewichtsverhältnis von Feststoff zu Flüssigkeit (S/L-Verhältnis) in der Suspension im Bereich von 1/5 bis 1/1, bevorzugt 1/5 bis 1/1,3, noch bevorzugter 1/4 bis 1/2 liegt, und/oder
die aus der Behandlung nach Schritt c) resultierende Säure eine 3 bis 10 molare, bevorzugt 5 bis 8 molare, Säure ist, und/oder
wobei die Säure ausgewählt ist aus Salzsäure, Salpetersäure, schweflige Säure und/oder Schwefelsäure, und/oder
wobei die Behandlung in Schritt c) bei einer Temperatur im Bereich von 30 bis 80 °C, bevorzugt 40 bis 80°C, bevorzugter 45 bis 75°C durchgeführt wird, und/oder
wobei die Dauer der Behandlung in Schritt c) im Bereich von 15 bis 90 Minuten, bevorzugt 20 bis 60 min, liegt.

9. Verfahren nach einem der vorhergehenden Ansprüche, **dadurch gekennzeichnet, dass** der Dᵥ(50)-Wert der Korngrößenverteilung des in Schritt d) erhaltenen Kalziumsulfats, insbesondere Kalziumsulfat-Anhydrits, im Bereich von 0,5 - 100µm, bevorzugt 1- 50µm, insbesondere 2-30µm, liegt.

10. Verfahren nach einem der Ansprüche 2 bis 9, **dadurch gekennzeichnet, dass** das für Schritt e) verwendete abgetrennte gereinigte Kalziumsulfat von Schritt d) mehr als 70 Gew.-%, bevorzugt mehr als 80 Gew.-%, bevorzugter mehr als 90 Gew.-%, des gesamten Kalziumsulfates in der Rohmehlmischung ausmacht.

11. Anlage zur Herstellung von Phosphorsäure und gereinigtem Kalziumsulfat durch Umsetzung von Rohphosphat mit Schwefelsäure, wobei die Anlage folgende Einrichtungen umfasst:
a) eine Reaktionseinheit, welche zumindest über
i) eine Zufuhr von Rohphosphat und
ii) zumindest einer Zuleitung von konzentrierter Schwefelsäure verfügt, wobei die besagte Reaktionseinheit konfiguriert ist, eine Suspension zumindest umfassend Phosphorsäure und Kalziumsulfat auszubilden, wobei das Kalziumsulfat in der Form von Dihydrat, Hemihydrat oder einer Kombination aus Hemihydrat und Dihydrat vorliegt, und die Reaktionseinheit einen Austritt für die besagte Suspension umfasst,
b) eine erste Trenneinheit, welche konfiguriert ist, die Suspension aus Reaktionseinheit a), umfassend das Kalziumsulfat aus Schritt a), als Feststoff von der flüssigen Phase abzutrennen und die Trenneinheit zumindest einen Austritt für die im wesentlichen Feststoff enthaltene Phase und einen Austritt für die im wesentlichen Flüssigkeit enthaltenden Phase umfasst, wobei die besagte Trenneinheit mit der besagten Reaktionseinheit aus Schritt a) fluidisch verbunden ist,
c) eine Aufreinigungseinheit, welche fluidisch mit der ersten Trenneinheit b) verbunden ist und zumindest über eine Zufuhr für eine Säure verfügt, wobei die Aufreinigungseinheit dazu konfiguriert ist, das in b) abgetrennte Kalziumsulfat und/oder Kalziumsulfat/Phosphorgips von einer Halde mit der der Aufreinigungseinheit zugeführten Säure in eine Suspension zu überführen, wobei die Suspension zumindest Kalziumsulfat und eine P₂O₅-haltige Säure-Lösung umfasst und die Aufreinigungseinheit weiterhin über eine Austrittsleitung für die Suspension verfügt,
d) eine zweite Trenneinheit, konfiguriert zum Behandeln der Suspension aus c), wobei die zweite Trenneinheit über zumindest einen Austritt für die P₂O₅-haltige Säure-Lösung und zumindest einen Austritt für festes Kalziumsulfat verfügt, wobei die zweite Trenneinheit stromabwärts der besagten Aufreinigungseinheit angeordnet ist und
e)
e1) zumindest eine fluidische Verbindung, konfiguriert für eine Rückführung der P₂O₅-haltigen Säure-Lösung von der zweiten Trenneinheit aus d) in die Reaktionseinheit oder stromaufwärts der Reaktionseinheit vorgesehen ist, und/oder
e2) zumindest eine weitere fluidische Verbindung ausgehend von der weiteren Trenneinheit aus d) stromaufwärts der zweiten Trenneinheit aus Schritt d) und stromabwärts der ersten Trenneinheit aus Schritt b) vorgesehen ist,
wobei die Aufreinigungseinheit c) und die zweite Trenneinheit d) derart konfiguriert sind, dass die Abtrennung des Kalziumsulfates aus der Suspension in Schritt d) um einen Zeitpunkt in einem Bereich von t_{MIN} + 30 Minuten bis t_{MIN} - 30 Minuten gestartet wird, wobei t_{MIN} definiert ist als der Zeitpunkt, bei welchem die Säurekonzentration während der Behandlung in Schritt c) ein Minimum durchläuft.

12. Anlage nach Anspruch 11, **dadurch gekennzeichnet, dass** die Aufreinigungseinheit c) und die zweite Trenneinheit d) derart konfiguriert sind, dass die Abtrennung des Kalziumsulfates aus der Suspension aus Schritt c) um einen Zeitpunkt in einem Bereich von t₁ + 20 Minuten bis t₁ - 20 Minuten, bevorzugt in einem Bereich von t₁ bis t₁ + 20 Minuten, gestartet wird, wobei t₁ definiert ist als der Zeitpunkt, bei welchem die Säurekonzentration während der Behandlung in Schritt c) zumindest um 1,0%, bevorzugt zumindest um 4,0%, ihrer Anfangssäurekonzentration vermindert wurde.

13. Anlage nach einem der Ansprüche 11 bis 12, **dadurch gekennzeichnet, dass** die Aufreinigungseinheit c) und die zweite Trenneinheit d) derart konfiguriert sind, dass die Abtrennung des Kalziumsulfates aus der Suspension in Schritt d) um einen Zeitpunkt in einem Bereich von t_{MIN} + 15 Minuten bis t_{MIN} - 15 Minuten gestartet wird.

## Claims

1. A process for producing phosphoric acid and purified calcium sulfate by reaction of raw phosphate with sulfuric acid, where the process comprises the following steps:
a) the raw phosphate in a first step is digested with concentrated sulfuric acid and converted to calcium sulfate in the form of dihydrate, hemihydrate or a combination of hemihydrate and dihydrate, and phosphoric acid,
b) the calcium sulfate is separated off as solid from the liquid phase of the suspension obtained,
c) the calcium sulfate from step b), separated off from the phosphoric acid, and/or calcium sulfate/phosphogypsum from the stockpile is treated with an acid, to give a suspension with purified calcium sulfate and P₂O₅-containing acid solution,
d) the purified calcium sulfate after step c) is separated off as solid from the liquid phase of the suspension obtained,
e) e1) the P₂O₅-containing liquid phase obtained from step d) is used as feedstock in step a), more particularly as a portion of the sulfuric acid required for digesting the raw phosphate, and/or e2) the P₂O₅-containing liquid phase obtained from step d) is used as feedstock for treating phosphogypsum from the stockpile according to step c), to give a suspension of purified calcium sulfate and P₂O₅-containing acid solution,
**characterized in that**
the separation of the calcium sulfate from the suspension in step d) is started at a time in a range from t_{MIN} + 30 minutes to t_{MIN} - 30 minutes,
where t_{MIN} is defined as the time at which the acid concentration during the treatment in step c) passes through a minimum.

2. A process for producing sulfuric acid and cement clinker, where the process comprises the following steps:
a) raw phosphate in a first step is digested with concentrated sulfuric acid and converted to calcium sulfate in the form of dihydrate, hemihydrate or a combination of hemihydrate and dihydrate, and phosphoric acid,
b) the calcium sulfate is separated off as solid from the liquid phase of the suspension obtained,
c) the calcium sulfate from step b), separated off from the phosphoric acid, and/or calcium sulfate/phosphogypsum from the stockpile is treated with an acid, to give a suspension with purified calcium sulfate and P₂O₅-containing acid solution,
d) the purified calcium sulfate after step c) is separated off as solid from the liquid phase of the suspension obtained,
e) the purified calcium sulfate separated off and obtained in step d) is mixed with admixtures and reducing agent, to give a raw meal mixture for cement clinker production,
f) the raw meal mixture is burned to give the cement clinker, with sulfur dioxide being formed as offgas, and
g) the sulfur dioxide formed is supplied as raw material to sulfuric acid production to produce the sulfuric acid, where the sulfuric acid produced can be used as starting material in phosphoric acid production and/or can be supplied to another utilization,
**characterized in that**
the separation of the calcium sulfate from the suspension in step d) is started at a time in a range from t_{MIN} = 30 minutes to t_{MIN} - 30 minutes,
where t_{MIN} is defined as the time at which the acid concentration during the treatment in step c) passes through a minimum.

3. The process as claimed in claim 1 or 2, where the separation of the calcium sulfate from the suspension in step d) is started at a time in a range from t₁ + 20 minutes to t₁ - 20 minutes, preferably in a range from t₁ to t₁ + 20 minutes, where t₁ is defined as the time at which the acid concentration during the treatment in step c) has been reduced at least by 1.0%, preferably at least by 4.0%, of its initial acid concentration.

4. The process as claimed in any of the preceding claims, **characterized in that** the separation of the calcium sulfate from the suspension in step d) is started at a time in a range from t_{MIN} + 15 minutes to t_{MIN} - 15 minutes.

5. The process as claimed in any of the preceding claims, **characterized in that** the treatment of the calcium sulfate/phosphogypsum from the stockpile without the calcium sulfate from step b) is treated in a separate step with an acid and
- the suspension formed is supplied to step d) or
- the suspension formed is supplied to a separate separating unit and in this unit the solid is separated from the liquid phase comprising P₂O₅-containing acid solution.

6. The process as claimed in any of the preceding claims, **characterized in that** the calcium sulfate is separated off from the phosphoric acid in step b) by filtration.

7. The process as claimed in any of the preceding claims, **characterized in that** calcium sulfate used in step c) comprises
the calcium sulfate obtained from a separating unit of step b), where preferably the solid calcium sulfate, preferably calcium sulfate filtercake, obtained after the first separation from the phosphoric acid is used directly or after one or more washes with liquid, preferably water, and/or in that stockpiled calcium sulfate/phosphogypsum is supplied to step c).

8. The process as claimed in any of the preceding claims, **characterized in that** in step c) the acid is added in an amount such that the weight ratio of solids to liquid (S/L ratio) in the suspension is in the range from 1/5 to 1/1,
preferably 1/5 to 1/1.3, more preferably 1/4 to 1/2, and/or
the acid resulting from the treatment after step c) is a 3 to 10 molar, preferably 5 to 8 molar, acid, and/or
where the acid is selected from hydrochloric acid, nitric acid, sulfurous acid and/or sulfuric acid, and/or
where the treatment in step c) is carried out at a temperature in the range from 30 to 80°C, preferably 40 to 80°C, more preferably 45 to 75°C, and/or
where the duration of the treatment in step c) is in the range from 15 to 90 minutes, preferably 20 to 60 min.

9. The process as claimed in any of the preceding claims, **characterized in that** the Dᵥ(50) of the grain size distribution of the calcium sulfate obtained in step d), more particularly calcium sulfate anhydrite, is in the range of 0.5-100 µm, preferably 1-50 µm, more particularly 2-30 µm.

10. The process as claimed in any of claims 2 to 9, **characterized in that** the purified calcium sulfate from step d), separated off and used for step e), accounts for more than 70 wt%, preferably more than 80 wt%, more preferably more than 90 wt% of the total calcium sulfate in the raw meal mixture.

11. A plant for producing phosphoric acid and purified calcium sulfate by reaction of raw phosphate with sulfuric acid, where the plant comprises the following devices:
a) a reaction unit which possesses at least
i) a raw phosphate feed and
ii) at least a concentrated sulfuric acid feed line,
where said reaction unit is configured to form a suspension at least comprising phosphoric acid and calcium sulfate, where the calcium sulfate is present in the form of dihydrate, hemihydrate or a combination of hemihydrate and dihydrate, and the reaction unit comprises an outlet for said suspension,
b) a first separating unit, which is configured to separate the suspension from reaction unit a), comprising the calcium sulfate from step a), as solid from the liquid phase, and the separating unit comprises at least an outlet for the substantially solids-containing phase and an outlet for the substantially liquid-containing phase, where said separating unit is fluidically connected to said reaction unit from step a),
c) a purifying unit, which is fluidically connected to the first separating unit b) and possesses at least a feed for an acid, where the purifying unit is configured to convert the calcium sulfate separated off in b) and/or calcium sulfate/phosphogypsum from a stockpile into a suspension with the acid supplied to the purifying unit, where the suspension comprises at least calcium sulfate and a P₂O₅-containing acid solution and the purifying unit further possesses an outlet line for the suspension,
d) a second separating unit, configured for treating the suspension from c), where the second separating unit possesses at least an outlet for the P₂O₅-containing acid solution and at least an outlet for solid calcium sulfate, where the second separating unit is arranged downstream of said purifying unit, and
e)
e1) at least one fluidic connection configured for returning the P₂O₅-containing acid solution from the second separating unit from d) into the reaction unit or provided upstream of the reaction unit, and/or
e2) at least one further fluidic connection, starting from the further separating unit from d), provided upstream of the second separating unit from step d) and downstream of the first separating unit from step b),
where the purification unit c) and the second separating unit d) are configured such that the separation of the calcium sulfate from the suspension in step d) is started at a time in a range from t_{MIN} + 30 minutes to t_{MIN} - 30 minutes, where t_{MIN} is defined as the time at which the acid concentration during the treatment in step c) passes through a minimum.

12. The plant as claimed in claim 11, **characterized in that** the purifying unit c) and the second separating unit d) are configured such that the separation of the calcium sulfate from the suspension from step c) is started at a time in a range from t₁ + 20 minutes to t₁ - 20 minutes, preferably in a range from t₁ to t₁ + 20 minutes, where t₁ is defined as the time at which the acid concentration during the treatment in step c) has been reduced at least by 1.0%, preferably at least by 4.0%, of its initial acid concentration.

13. The plant as claimed in any of claims 11 to 12, **characterized in that** the purifying unit c) and the second separating unit d) are configured such that the separation of the calcium sulfate from the suspension in step d) is started at a time in a range from t_{MIN} + 15 minutes to t_{MIN} - 15 minutes.

## Revendications

1. Procédé de production d'acide phosphorique et de sulfate de calcium purifié par réaction de phosphate brut avec de l'acide sulfurique, dans lequel le procédé comprend les étapes suivantes :
a) dans une première étape, le phosphate brut est digéré avec de l'acide sulfurique concentré et converti en sulfate de calcium sous forme de dihydrate, d'hémihydrate ou d'une combinaison d'hémihydrate et de dihydrate, et en acide phosphorique,
b) le sulfate de calcium est séparé sous forme solide de la phase liquide de la suspension obtenue,
c) le sulfate de calcium de l'étape b), séparé de l'acide phosphorique, et/ou le sulfate de calcium/phosphogypse provenant du stock est traité avec un acide, pour donner une suspension contenant du sulfate de calcium purifié et une solution acide contenant_{du} P₂ O₅,
d) le sulfate de calcium purifié après l'étape c) est séparé sous forme solide de la phase liquide de la suspension obtenue,
e) e1) la phase liquide contenant du P₂ O₅ obtenue à l'étape d) est utilisée comme matière première à l'étape a), plus particulièrement comme une partie de l'acide sulfurique nécessaire à la digestion du phosphate brut, et/ou e2) la phase liquide contenant du P₂ O₅ obtenue à l'étape d) est utilisée comme matière première pour traiter le phosphogypse provenant du stock conformément à l'étape c), afin d'obtenir une suspension de sulfate de calcium purifié et une solution acide contenant du P₂ O₅,
**caractérisé en ce que**
la séparation du sulfate de calcium de la suspension à l'étape d) est commencée à un moment compris dans une plage allant de t_{MIN} + 30 minutes à t_{MIN} - 30 minutes, où t_{MIN} est défini comme le moment où la concentration en acide pendant le traitement à l'étape c) passe par un minimum.

2. Procédé de production d'acide sulfurique et de clinker de ciment, dans lequel le procédé comprend les étapes suivantes :
a) le phosphate brut est, dans une première étape, digéré avec de l'acide sulfurique concentré et converti en sulfate de calcium sous forme de dihydrate, d'hémihydrate ou d'une combinaison d'hémihydrate et de dihydrate, et en acide phosphorique,
b) le sulfate de calcium est séparé sous forme solide de la phase liquide de la suspension obtenue,
c) le sulfate de calcium de l'étape b), séparé de l'acide phosphorique, et/ou le sulfate de calcium/phosphogypse provenant du stock est traité avec un acide, pour donner une suspension contenant du sulfate de calcium purifié et une solution acide contenant_{du} P₂ O₅,
d) le sulfate de calcium purifié après l'étape c) est séparé sous forme solide de la phase liquide de la suspension obtenue,
e) le sulfate de calcium purifié séparé et obtenu à l'étape d) est mélangé avec des adjuvants et un agent réducteur, pour donner un mélange brut destiné à la production de clinker de ciment,
f) le mélange brut est brûlé pour donner le clinker de ciment, avec formation de dioxyde de soufre comme gaz résiduaire, et
g) le dioxyde de soufre formé est fourni comme matière première pour la production d'acide sulfurique afin de produire l'acide sulfurique, où l'acide sulfurique produit peut être utilisé comme matière première dans la production d'acide phosphorique et/ou peut être fourni à une autre utilisation,
**caractérisé en ce que**
la séparation du sulfate de calcium de la suspension à l'étape d) est lancée à un moment compris dans une plage allant de t_{MIN} = 30 minutes à t_{MIN} - 30 minutes, où t_{MIN} est défini comme le moment où la concentration en acide pendant le traitement à l'étape c) passe par un minimum.

3. Procédé selon la revendication 1 ou 2, dans lequel la séparation du sulfate de calcium de la suspension à l'étape d) est lancée à un moment compris dans une plage allant de t₁ + 20 minutes à t₁ - 20 minutes, de préférence dans une plage comprise entre t₁ et t₁ + 20 minutes, où t₁ est défini comme le moment où la concentration en acide pendant le traitement à l'étape c) a été réduite d'au moins 1,0 %, de préférence d'au moins 4,0 %, par rapport à sa concentration initiale en acide.

4. Procédé selon l'une quelconque des revendications précédentes, **caractérisé en ce que** la séparation du sulfate de calcium de la suspension à l'étape d) est commencée à un moment compris dans une plage allant de t_{MIN} + 15 minutes à t_{MIN} - 15 minutes.

5. Procédé selon l'une quelconque des revendications précédentes, **caractérisé en ce que** le traitement du sulfate de calcium/phosphogypse provenant de l' e de stockage sans le sulfate de calcium de l'étape b) est traité dans une étape séparée avec un acide et
- la suspension formée est fournie à l'étape d) ou
- la suspension formée est fournie à une unité de séparation séparée et, dans cette unité, le solide est séparé de la phase liquide comprenant une solution acide contenant P₂ O₅.

6. Procédé selon l'une quelconque des revendications précédentes, **caractérisé en ce que** le sulfate de calcium est séparé de l'acide phosphorique à l'étape b) par filtration.

7. Procédé selon l'une quelconque des revendications précédentes, **caractérisé en ce que**
le sulfate de calcium utilisé dans l'étape c) comprend
le sulfate de calcium obtenu à partir d'une unité de séparation de l'étape b), où de préférence le sulfate de calcium solide, de préférence le gâteau de filtration de sulfate de calcium, obtenu après la première séparation de l'acide phosphorique est utilisé directement ou après un ou plusieurs lavages avec un liquide, de préférence de l'eau, et/ou
**en ce que** le sulfate de calcium/phosphogypse stocké est fourni à l'étape c).

8. Le procédé selon l'une quelconque des revendications précédentes,
**caractérisé en ce que**
à l'étape c), l'acide est ajouté en une quantité telle que le rapport pondéral des solides aux liquides (rapport S/L) dans la suspension est compris entre 1/5 et 1/1, de préférence entre 1/5 et 1/1,3, de préférence encore entre 1/4 et 1/2, et/ou
l'acide résultant du traitement après l'étape c) est un acide de 3 à 10 moles, de préférence de 5 à 8 moles, et/ou
où l'acide est choisi parmi l'acide chlorhydrique, l'acide nitrique, l'acide sulfureux et/ou l'acide sulfurique, et/ou
le traitement de l'étape c) est effectué à une température comprise entre 30 et 80 °C, de préférence entre 40 et 80 °C, plus préférablement entre 45 et 75 °C, et/ou
la durée du traitement de l'étape c) étant comprise entre 15 et 90 minutes, de préférence entre 20 et 60 minutes.

9. Procédé selon l'une quelconque des revendications précédentes, **caractérisé en ce que** le Dᵥ (50) de la distribution granulométrique du sulfate de calcium obtenu à l'étape d), plus particulièrement du sulfate de calcium anhydrite, est comprise entre 0,5 et 100 µm, de préférence entre 1 et 50 µm, plus particulièrement entre 2 et 30 µm.

10. Procédé selon l'une quelconque des revendications 2 à 9, **caractérisé en ce que** le sulfate de calcium purifié de l'étape d), séparé et utilisé pour l'étape e), représente plus de 70 % en poids, de préférence plus de 80 % en poids, plus préférablement plus de 90 % en poids du sulfate de calcium total dans le mélange de farine brute.

11. Installation pour la production d'acide phosphorique et de sulfate de calcium purifié par réaction de phosphate brut avec de l'acide sulfurique, dans laquelle l'installation comprend les dispositifs suivants :
a) une unité de réaction qui possède au moins
i) une alimentation en phosphate brut et
ii) au moins une ligne d'alimentation en acide sulfurique concentré, ladite unité de réaction étant configurée pour former une suspension comprenant au moins de l'acide phosphorique et du sulfate de calcium, le sulfate de calcium étant présent sous forme de dihydrate, d'hémihydrate ou d'une combinaison d'hémihydrate et de dihydrate, et l'unité de réaction comprenant une sortie pour ladite suspension,
b) une première unité de séparation, qui est configurée pour séparer la suspension de l'unité de réaction a), comprenant le sulfate de calcium de l'étape a), sous forme solide de la phase liquide, et l'unité de séparation comprend au moins une sortie pour la phase contenant essentiellement des solides et une sortie pour la phase contenant essentiellement du liquide, ladite unité de séparation étant reliée de manière fluidique à ladite unité de réaction de l'étape a),
c) une unité de purification, qui est reliée de manière fluidique à la première unité de séparation b) et possède au moins une alimentation pour un acide, l'unité de purification étant configurée pour convertir le sulfate de calcium séparé dans b) et/ou le sulfate de calcium/phosphogypse provenant d'un stock en une suspension avec l'acide fourni à l'unité de purification, la suspension comprenant au moins du sulfate de calcium et une solution acide contenant P₂ O₅ et l'unité de purification possède en outre une conduite de sortie pour la suspension,
d) une deuxième unité de séparation, configurée pour traiter la suspension provenant de c), où la deuxième unité de séparation comporte au moins une sortie pour la solution acide contenant du P₂ O₅ et au moins une sortie pour le sulfate de calcium solide d' , où la deuxième unité de séparation est disposée en aval de ladite unité de purification, et
e)
e1) au moins une connexion fluidique configurée pour renvoyer la solution acide contenant du P₂ O₅ provenant de la deuxième unité de séparation de d) dans l'unité de réaction ou prévue en amont de l'unité de réaction, et/ou
e2) au moins une autre connexion fluidique, partant de l'autre unité de séparation de d), prévue en amont de la deuxième unité de séparation de l'étape d) et en aval de la première unité de séparation de l'étape b),
où l'unité de purification c) et la deuxième unité de séparation d) sont configurées de telle sorte que la séparation du sulfate de calcium de la suspension à l'étape d) commence à un moment compris dans une plage allant de t_{MIN} + 30 minutes à t_{MIN} - 30 minutes, où t_{MIN} est défini comme le moment où la concentration en acide pendant le traitement à l'étape c) passe par un minimum.

12. L'installation selon la revendication 11, **caractérisée en ce que** l'unité de purification c) et la deuxième unité de séparation d) sont configurées de telle sorte que la séparation du sulfate de calcium de la suspension de l'étape c) commence à un moment compris dans une plage allant de t₁ + 20 minutes à t₁ - 20 minutes, de préférence dans une plage comprise entre t₁ et t₁ + 20 minutes, où t₁ est défini comme le moment où la concentration en acide pendant le traitement à l'étape c) a été réduite d'au moins 1,0 %, de préférence d'au moins 4,0 %, par rapport à sa concentration initiale en acide.

13. L'installation selon l'une quelconque des revendications 11 à 12,
**caractérisée en ce que** l'unité de purification c) et la deuxième unité de séparation d) sont configurées de telle sorte que la séparation du sulfate de calcium de la suspension à l'étape d) commence à un moment compris dans une plage allant de t_{MIN} + 15 minutes à t_{MIN} - 15 minutes.
